Europäisches Patentamt

European Patent Office

Office européen des brevets

(11) Veröffentlichungsnummer: **0 018 502**
**B1**

# (12) EUROPÄISCHE PATENTSCHRIFT

(45) Veröffentlichungstag der Patentschrift:
**11.07.84**

(21) Anmeldenummer: **80101647.8**

(22) Anmeldetag: **27.03.80**

(51) Int. Cl.³: **A 61 M 16/02**, A 61 H 33/06,
F 24 D 13/02, G 05 D 23/24,
H 02 H 3/16

(54) Verfahren und Einrichtung zur homogenen Strahlungsklimatisierung eines allseits umschlossenen Raumes, insbesondere eines Tepidariums.

(30) Priorität: **28.03.79 DE 2912196**

(43) Veröffentlichungstag der Anmeldung:
**12.11.80 Patentblatt 80/23**

(45) Bekanntmachung des Hinweises auf die Patenterteilung:
**11.07.84 Patentblatt 84/28**

(84) Benannte Vertragsstaaten:
**AT BE CH FR GB SE**

(56) Entgegenhaltungen:
**CH - A - 373 542**
**CH - A - 423 163**
**DE - A - 881 104**
**DE - A - 1 566 435**
**DE - A - 2 154 555**
**DE - A - 2 233 762**
**DE - A - 2 442 924**
**DE - A - 2 520 765**
**DE - A - 2 620 602**
**DE - A - 2 807 622**
**FR - A - 1 148 463**
**FR - A - 1 417 286**
**FR - A - 2 070 503**
**GB - A - 535 446**
**GB - A - 672 835**
**GB - A - 962 658**

(73) Patentinhaber: **Lueder, Holger, Dr., Loretostrasse 3,**
**CH-6300 Zug (CH)**

(72) Erfinder: **Lueder, Holger, Dr., Loretostrasse 3,**
**CH-6300 Zug (CH)**
Erfinder: **Häusermann, Heinrich, Albisstrasse 21,**
**CH-8915 Hausen am Albis (CH)**

(74) Vertreter: **Zeitler, Giselher, Postfach 26 02 51,**
**D-8000 München 26 (DE)**

(56) Entgegenhaltungen: (Fortsetzung)
**LU - A - 47 322**
**US - A - 2 512 875**
**US - A - 3 597 652**
**US - A - 4 031 356**
**US - A - 4 121 432**

**ELEKTRIZITÄTSVERWERTUNG, Vol. 49, Nr. 6, 1974 (CH)**
**LUEDER: "Grossflächen-Strahlungsheizung mit**
**elektrisch heizbaren Isolierplatten" Seiten 212-223**

## Beschreibung

Die Erfindung betrifft ein Verfahren sowie eine Einrichtung zur homogenen Strahlungsklimatisierung eines allseits umschlossenen Raumes gemäss dem Oberbegriff des Anspruchs 1 bzw. gemäss dem Oberbegriff des Anspruchs 3.

Bei dieser besonderen Form der Strahlungsklimatisierung mit gegenüber der Strahlungstemperatur stark abgesenkter Raumlufttemperatur, bei der bedeutende Energieeinsparungen erzielt werden, wird nach den Erfahrungen der Wiener Ärzte H. Krammer und W. Ledwina unter Vermeidung jeglichen Klimastresses eine rasche Entspannung der glatten Muskulatur des menschlichen Körpers ermöglicht und sowohl in Ruhe als auch in Bewegung eine homogene Durchblutung in den verschiedenen Körpersegmenten durch Unterstützung der den Blutkreislauf fördernden arteriolären Peristaltik erreicht. Krammer und Ledwina haben hierbei entdeckt, dass der Blutdruck von Hypertonikern in einem Strahlungsklima binnen 20 Minuten auf basale Werte zurückgeführt wird und dass negative Nachbilder im Auge etwa doppelt schneller verschwinden, d.h. also, dass die Erholungszeit für eine sensorische Aufnahmefähigkeit um bis zu 50% verkürzt ist.

H. Lueder beobachtete an einer Patientin mit starken, die Beweglichkeit einschränkenden rheumatischen Beschwerden, die während dreier Monate wöchentlich einmal eine Nacht in einem speziell ausgebildeten Tepidarium mit besonders homogen gestaltetem Wärmestrahlungsfeld von 36 °C und einer zugfrei auf 25 °C gekühlten Raumluft geschlafen hatte, eine vegetative Gesamtumschaltung von der antiinfektiösen in die antiphlogistische Phase, wonach die rheumatischen Schmerzen vollkommen verschwanden und die Beweglichkeit der Gliedmassen auch auf Dauer wiederhergestellt war. Lueder stellte ausserdem fest, dass der gesunde Mensch im Strahlungsklima mit einer allseitigen Strahlungstemperatur von 37 °C und einer Raumlufttemperatur von 25–28 °C mit wesentlich verkürztem Nachtschlaf, vielfach nur mit vier Stunden, auskommt. Wiederholtes Schlafen in einem derart homogen gestalteten Strahlungsklima führte auch in krankhaften Fällen zu gleichmässiger Durchblutung der Körperschale, zum Abbau von Fettpolstern ohne besondere Diät, zum Verschwinden von Zellulite, zur Verjüngung der Haut am ganzen Körper, insbesondere auch am Kopf, wobei bereits ergraute Haare durch solche der früheren Haarfarbe ersetzt wurden, zur Verfestigung der Zähne im Kiefer, zum Rückgang der Paradentose und in einem Fall von nicht konvulsiver Epilepsie zum Verschwinden der gefürchteten Anfälle. Nicht zuletzt haben die Untersuchungen von Lueder an 19 Patienten ergeben, dass Präkanzerosen, die mit dem von J. Gutschmidt entwickelten Karzinochrom-Reagenz als solche diagnostiziert worden waren, im kombinierten Sauerstoffionen- und homogenen Strahlungsklima mit allseitiger Strahlungstemperatur von 38 °C und 25–28 °C Raumlufttemperatur ohne Medikamente rückgängig gemacht und schliesslich ganz geheilt werden können.

Um der Allgemeinheit eine solche medikamentfreie Klimatherapie zugänglich zu machen und zudem die praktischen Ärzte in die Lage zu versetzen, ihr Untersuchungen an Patienten im entspannten Zustand vorzunehmen, d.h. ohne den Kälteschock, den der Patient beim Entkleiden im normal klimatisierten Raum erleidet, ist es erwünscht, ein mobiles Tepidarium zur Verfügung zu haben, das ohne besondere Umstände und bauliche Installation in normalen Räumen aufgestellt werden kann. Eine solche Einrichtung ist z.Zt. noch nicht greifbar.

Bekannt sind nur doppelwändige Kalorimeter in Form und Grösse eines Sarges, deren Hohlwände von vorgewärmter Luft und deren Innenraum von einem horizontalen Strom kühler Luft durchströmt werden. Abgesehen davon, dass es bei diesen Kalorimetern nicht gelingt, die Raumlufttemperatur wesentlich gegenüber der Strahlungstemperatur ihrer Wände zugfrei abzusenken, macht sich bei ihnen störend bemerkbar, dass das Wärmestrahlungsfeld in ihrem Innern nur verhältnismässig träge aufzurichten und auf die gewünschte Solltemperatur einzuregeln ist.

Es ist zwar schon eine Einrichtung bekannt (Elektrizitätsverwertung, Vol. 49, Nr. 6, 1974, Seiten 212–223, «Grossflächen-Strahlungsheizung mit elektrisch heizbaren Isolierplatten» von Dr. H. Lueder), bei der das Wärmestrahlungsfeld, eine vollständige Belegung der bauseitigen Wände mit Flächenheizleitern vorausgesetzt, schnell herzustellen ist. Jedoch ist dieses Wärmestrahlungsfeld trotz vollständiger Belegung der Hartschaumplatten mit einem auf Kraftpapier kaschierten Aluminiumfolienmäander, trotz in flächenhaftem Wärmekontakt aufgebrachten Schutzüberzuges grosser Durchgangsfähigkeit und trotz Belegung der ungeheizten Decke mit strahlungsreflektierender Folie bei weitem nicht homogen genug, um die von H. Lueder entdeckten biologischen Effekte zu erzielen. Es hat sich gezeigt, dass die als Flächenheizleiter dienenden, elektrisch beheizten Isolierplatten in der Nähe der Einführungsstellen von Frischluft wesentlich kälter sind und dass daher der untere Teil der Heizwände mit erheblich geringerer Temperatur in den Raum strahlt als ihr oberer Teil. Dies macht sich unliebsam als Zug an den Beinen bemerkbar und entwärmt den auf einer Matratze liegenden unbekleideten Körper noch immer zu sehr an der wandzugewandten Seite.

Der Erfindung liegt daher die Aufgabe zugrunde, in Erkenntnis der schädlichen Wirkungen unterschiedlicher Strahlungstemperaturen verschiedener Teile der Raumumschliessung eine technische Lösung für das Problem der Homogenisierung des Wärmestrahlungsfeldes bei gegenüber der Strahlungstemperatur abgesenkter Raumlufttemperatur anzugeben.

Diese Aufgabe wird verfahrensmässig durch die Merkmale des Anspruchs 1 sowie einrichtungsmässig durch die Merkmale des Anspruchs 3 gelöst. Eine vorteilhafte Weiterbildung des erfindungsgemässen Verfahrens ist in Anspruch 2 angegeben, während vorteilhafte Ausgestaltungen der erfindungsgemässen Einrichtung in den auf Anspruch 3 folgenden Ansprüchen angegeben sind.

Das Verfahren sowie die Einrichtung gemäss der Erfindung ermöglichen eine gleichmässig verteilte Durchblutung von Kern und Schale des menschlichen Körpers sowohl in Ruhe als auch in Bewegung. Nur bei einer derart gleichmässig verteilten Durchblutung bis in die Peripherie werden die von Krammer, Ledwina und Lueder entdeckten physiologischen und medizinischen Effekte auf kürzestem Wege erzielt und viele der am häufigsten auftretenden Zivilisationskrankheiten vermieden.

Da die verschiedenen Dermatome des menschlichen Körpers durch den direkten Strahlungsaustausch mit den festen Gegenständen seiner Umgebung und der Raumumschliessung bei nur schwach bewegter Raumluft ungleich stärker in ihrer Temperatur beeinflusst werden als durch die Konvektion der am Körper aufsteigenden Luft, äussern sich Temperaturunterschiede verschiedener Teile der Raumumschliessung, wie z.B. des Fensters und einer Innenwand im Winter, bei festem Arbeitsplatz infolge inhomogener Entwärmung auf die Dauer in einer Unsymmetrie der Temperaturen auf der Haut, in der Körperschale und bald auch in Durchblutungsstörungen des Atemtraktes. Umgekehrt kann aus dem gleichen Grunde ein Ausgleich der Temperaturen in den verschiedenen Dermatomen dann erzwungen werden, wenn die einzelnen Sichtflächen der Raumumschliessung in den Raum Wärmestrahlung mit einer einheitlichen Temperatur emittieren und die von den direkt beheizten Flächen emittierte Wärmestrahlung nach Absorption remittieren oder mit geringen Verlusten reflektieren. Die Temperatur dieser Strahlung sollte so eingestellt sein, dass die Haut an allen Stellen des Rumpfes eine einheitliche Temperatur im Bereich von 31,5 bis 34,5 °C annimmt.

Um in einem solchen Wärmestrahlungsfeld auch dem in Bewegung befindlichen, physisch arbeitenden Menschen so viel Wärme zu entziehen, dass er nicht unter einem lästigen Wärmestau zu leiden hat, muss gleichzeitig die Temperatur der Raumluft gegenüber der Strahlungstemperatur um mehr als 4 Grad abgesenkt werden. Erfindungsgemäss ist dies bei nicht direkt beheiztem Fussboden, ohne Zugerscheinungen und ohne Frischluftmangel zu empfinden, allein aufgrund des thermischen Auftriebes der an den wärmeren Wänden und an den Rauminsassen erwärmten Raumluft möglich, wenn kühlere Frischluft oder konditionierte Luft in einzelnen Luftströmen über dem Fussboden verteilt tangential zum Fussboden in den Raum eingelassen wird und die erwärmte Luft durch einen etwa handbreiten Spalt zwischen dem oberen Rand der Wände und der Decke entweichen kann. Der hiermit erzielte entscheidende Vorteil besteht darin, dass es in kürzester Zeit zu einer Entspannung der glatten Gefässmuskulatur, einer Entstörung fehlerhafter Wärmeregulation, einer Reduktion des Blutdruckes von Hypertonikern auf basale Werte, einer schnellen Erholung vom Stress und zu einer Prävention des Herzinfarktes führt.

Mit dem Widerstandswert der in Serie geschalteten Flächenheizleiter wird sowohl deren mittlere Temperatur als auch die mittlere Strahlungstemperatur ihrer strahlungsemittierenden Überzüge vom thermostatischen Regler erfühlt und automatisch auf den am Regler eingestellten Sollwert eingeregelt. Um Störungen des Regelvorganges durch Spannungsstösse im Versorgungsnetz zu vermeiden, schaltet erfindungsgemäss der vom temperaturabhängigen Widerstand der Flächenheizleiter gesteuerte thermostatische Regler die Heizleiter während eines Nulldurchgangs des vom Versorgungsnetz bezogenen Wechselstromes vom Wechselstromnetz ab, sobald ihr Widerstand bzw. ihre mittlere Temperatur für eine vorgegebene Anzahl von aufeinanderfolgenden Perioden den am Regler eingestellten Wert des Kompensationswiderstandes bzw. der Solltemperatur überschritten hat, und verbindet sie wieder mit dem Wechselstromnetz, wenn eine vorbestimmte grössere Anzahl von Perioden vergangen ist und die Flächenheizleiter unter die Solltemperatur abgekühlt sind bzw. ihr Widerstand den eingestellten Wert des Kompensationswiderstandes unterschritten hat.

Wesentliche erfindungsgemässe Massnahmen beziehen sich auf die zugfreie Absenkung der Raumlufttemperatur gegenüber der Temperatur des Wärmestrahlungsfeldes sowie auf die homogene Erwärmung der Flächenheizleiter. Zu ersterem Zweck ist es bekannt, entweder einen kühleren Luftstrom tangential an die Decke zu blasen oder kühle Zuluft durch einen Hohlfussboden mit aufgelegtem, porösem Spannteppich zu drücken. Demgegenüber bedient sich die Erfindung eines wesentlich einfacheren Verfahrens und einer Behinderung des Wärmeübergangs von den elektrisch beheizten Wänden an die kühlere Raumluft. So hat sich zur Absenkung der Raumlufttemperatur im Tepidarium die Zufuhr von Frischluft durch am unteren Rand der Heizwände angebrachte Löcher oder einen schmalen Luftspalt zwischen Fussboden und Heizwand und die Abfuhr der Abluft durch einen etwa handbreiten Spalt zwischen Decke und oberem Rand der Heizwände bewährt, ausserdem eine Behinderung des konvektiven Wärmeüberganges von den elektrisch beheizten Wänden zur kühleren Raumluft mittels strahlungsreflektierender Netze, die, an den Heizwänden befestigt, die Grenzschicht durch ein wärmedämmendes, an den Heizwänden festgehaltenes Luftpolster verstärken, ohne die von den Heizwänden emittierte Wärmestrahlung beim Durchtritt wesentlich zu schwächen. Durch diese Massnahme ist es möglich, die Raumluft allein aufgrund des thermischen Auftriebes an den Wänden und an den Rauminsassen zug- und wirbelfrei stationär um mehr als 15 Grad gegenüber der Strahlungstemperatur der Raumumschliessung abzukühlen.

Im besonderen ist dieser Fall einer Behinderung des konvektiven Wärmeüberganges als gegeben anzusehen, wenn es sich darum handelt, den unteren Teil der Raumwände weniger durch die am unteren Rand der Heizwände eingeführte kühlere Frischluft abzukühlen, um die Strahlungstemperatur der Heizwände in verschiedenen Höhen weitgehend einander anzugleichen, ein Mittel, das unter günstigen Umständen eine Verstärkung der flächenspezifischen Heizleistung durch nach unten zu abnehmende Mäanderbandbreiten bei horizontalen Heizmäandern überflüssig macht.

Die Durchführung des erfindungsgemässen Verfahrens lässt auch eine homogene Strahlungsklimatisierung auf kleinstem Raum, nämlich auf einer Liege, zu, auf welcher der unbekleidete menschliche Körper von allen Seiten durch elektrisch beheizte Isolierplatten bestrahlt und mit dem schwachen Zug des von den Isolierplatten gebildeten Kamins belüftet wird.

Bei einer praktisch verwirklichten Ausführungsform kann die Einrichtung zur Durchführung des erfindungsgemässen Verfahrens versehen sein mit

a) einem strahlungsreflektierenden, mit Korrosionsschutz versehenen Überzug auf dem nicht direkt beheizten Fussboden, der überall dort, wo er begangen wird, zusätzlich mit einem durch Kunststoff imprägnierten Gleitschutznetz von etwa 1 cm Maschenweite belegt ist,

b) einer Liege im Tepidarium oder einer Liege mit darüber gestülptem Mini-Tepidarium, die aus einem mit grobmaschigem Kordelnetz bespannten, horizontal auf Füssen stehenden oder an der Decke aufgehängten Bettrahmen besteht und die Wärmestrahlung des Tepidariums bzw. der am Bettrahmen befestigten, elektrisch beheizten Isolierplatten ebenso wie die kühlere Raumluft dem darauf liegenden menschlichen Körper auch dem grössten Teil seiner Auflagefläche zukommen lässt,

c) einem Mehrscheiben- oder Mehrfolienverbundfenster oder einem Verbundfenster mit elektrisch heizbarer Innenscheibe in einer der Wände, das die von den Innenflächen des Raumes auffallende Wärmestrahlung mit nur wenig niedrigerer Strahlungstemperatur remittiert bzw. mit der gleichen Strahlungstemperatur emittiert,

d) einer Belüftung des Innenraumes mit kühler Zuluft über in den Wänden nahe dem kalten Fussboden angebrachte grössenverstellbare Lufteinlassöffnungen oder über einen höhenverstellbaren horizontalen Belüftungsspalt zwischen Wand bzw. elektrisch heizbarer Isolierplatte und Fussboden, wodurch die Raumlufttemperatur um mindestens 4 Grad gegenüber der mittleren Strahlungstemperatur aller strahlenden und rückstrahlenden Innenflächen der Raumumschliessung zugfrei abgesenkt werden kann, sofern für die Entlüftung ein etwa handbreiter Luftspalt zwischen Oberkante der Wände und Decke vorgesehen ist,

e) einem mit Fehlerstromschutzschaltern erreichbaren Brandschutz, gemäss dem der Flächenheizleiter bereits bei einem Fehlerstrom von beispielsweise nur 30 mA, der bei Überhitzung bzw. Funkendurchschlag an irgendeiner Stelle des vom Heizstrom durchflossenen Mäanderbandes vom Heizleiter via aufgeweichter bzw. durchgeschlagener Isolation zum Schutzleiterschirm abfliesst, vom Kraftstromnetz abgetrennt wird, bevor die überhitzte Stelle bzw. der Funkendurchschlag den Hartschaum der Isolierplatte in Brand setzen kann.

f) einer Alarmvorrichtung, die beim Ausfallen der Energieversorgung seitens des Kraftstromnetzes oder beim Auslösen eines den Flächenheizleitern vorgeschalteten Fehlerstromschutzschalters oder beim Auftreten einer unzulässigen Übertemperatur bzw. beim Versagen der elektronischen Regelung der Strahlungstemperatur in Tätigkeit gesetzt wird.

Wenn das Isolationsmaterial auf der Schutzleiterfolie und der darüber angebrachte wärmestrahlende Überzug pro Flächeneinheit einen Wärmedurchgangsleitwert aufweist, der sehr viel grösser ist als die Wärmeübergangszahl zum Raum, d. h. die Dichte des Wärmestromes, der von der raumseitigen Sichtfläche der elektrisch beheizten Isolierplatte bei 1 Grad Temperaturdifferenz zum Raum abfliesst, erlaubt eine Regelvorrichtung, die nach oben angegebenem Prinzip vom elektrischen Widerstand der in Serie geschalteten Heizmäander gesteuert ist, erstmals die Einstellung und Aufrechterhaltung einer Strahlungstemperatur im Raum, die unabhängig ist von der Raumlufttemperatur, der Raumbesetzung und den durch Transmission nach aussen bedingten, veränderlichen Wärmeverlusten.

Die Erfindung wird im folgenden anhand der Zeichnung näher erläutert. Es zeigen:

Fig. 1 bei entfernter vorderer Längswand perspektivisch das erfindungsgemäss ausgestaltete Tepidarium,

Fig. 2 zwei mit Feder und Nut zusammengefügte Flächenheizleiter in Form von elektrisch heizbaren Isolierplatten in horizontalem Schnitt gemäss Linie A–A nach Fig. 3 und

Fig. 3 in Vorderansicht zur Darstellung der elektrischen Anschlüsse,

Fig. 4 die Tepidariumsdecke in Draufsicht und

Fig. 5 in Seitenansicht über der Oberkante der Flächenheizleiter,

Fig. 6 perspektivisch einen im Tepidarium aufzustellenden, mit einem Kordelnetz bespannten Bettrahmen und

Fig. 7 eine abgewandelte Ausführungsform hiervon,

Fig. 8 den Bettrahmen gemäss Fig. 7 im Querschnitt in der Ausgestaltung als isolierte strahlungsklimatisierte Liege,

Fig. 9 im Längsschnitt eine abgewandelte Ausführungsform der strahlungsklimatisierten Liege,

Fig. 10 im Querschnitt eine aus zwei Kordelnetzen mit dazwischen angeordneten horizontalen Schraubenfedern zusammengesetzte konvexe Matratze für den Bettrahmen,

Fig. 11 im Querschnitt eine weitere abgewandelte Ausführungsform der strahlungsklimatisierten Liege mit einem zweiten grobmaschigen Kordelnetz zur Aufnahme von Brustkort, Bauch und Oberschenkeln in der Bauchlage,

Fig. 12 ein als Flächenheizleiter dienendes metallisches Mäanderband auf einer elektrisch nichtleitenden Trägerfolie in Draufsicht und

Fig. 13 im Querschnitt gemäss Linie A–A nach Fig. 12,

Fig. 14 im Querschnitt den Flächenheizleiter, der sowohl auf der beheizten als auch auf der unbeheizten Seite mit einer Edelputzschicht überzogen ist,

Fig. 15 in Draufsicht sowie im Schnitt der elektrische Anschluss des Flächenheizleiters,

Fig. 16 die elektrische Verbindung der Mäanderbandenden zweier fest montierter Isolierplatten,

Fig. 17 zwei benachbarte Isolierplatten mit in deren gemeinsamer Nut eingelegter Kupalblecheinfassung des Stromzuführungsblechstreifens, im horizontalen Schnitt gemäss Linie C–C nach Fig. 18 und

Fig. 18 im vertikalen Schnitt gemäss Linie D–D nach Fig. 17,

Fig. 19 eine vertikale Isolierplatte 1 mit einem auf ihrer Strahlseite zum Zweck der Herabsetzung des Wärmeübergangs an die Raumluft aufgeklebten, aus dünner blanker Aluminiumfolie gefertigten Bienenwabennetz in Draufsicht und

Fig. 20 in Seitenansicht,

Fig. 21 eine abgewandelte Ausführungsform der Isolierplatte mit auf die Strahlseite aufgestäubten Kunstfaserstücken,

Fig. 22 eine Prinzipschaltung zur thermostatischen Regelung der mittleren Strahlungstemperatur,

Fig. 23 eine abgewandelte Prinzipschaltung zur thermostatischen Regelung des Heizstromes,

Fig. 24 eine Prinzipschaltung für den Brand- und Berührungsschutz zweier mit Schutzleiterschirm versehener Gruppen von Flächenheizleitern,

Fig. 25 eine abgewandelte Ausführungsform hiervon und

Fig. 26 eine Prinzipschaltung für den Brand- und Berührungsschutz dreier mit Schutzleiterschirm versehener Gruppen von Flächenheizleitern.

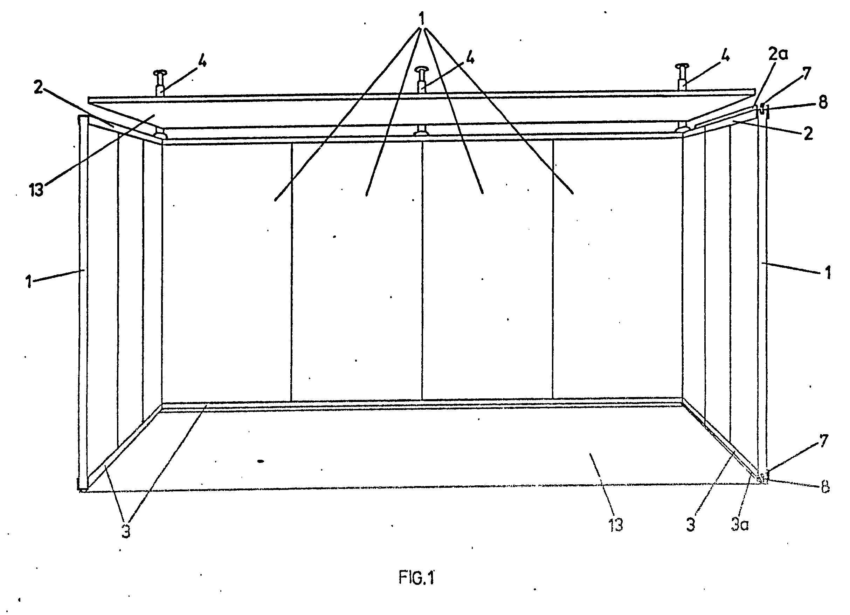

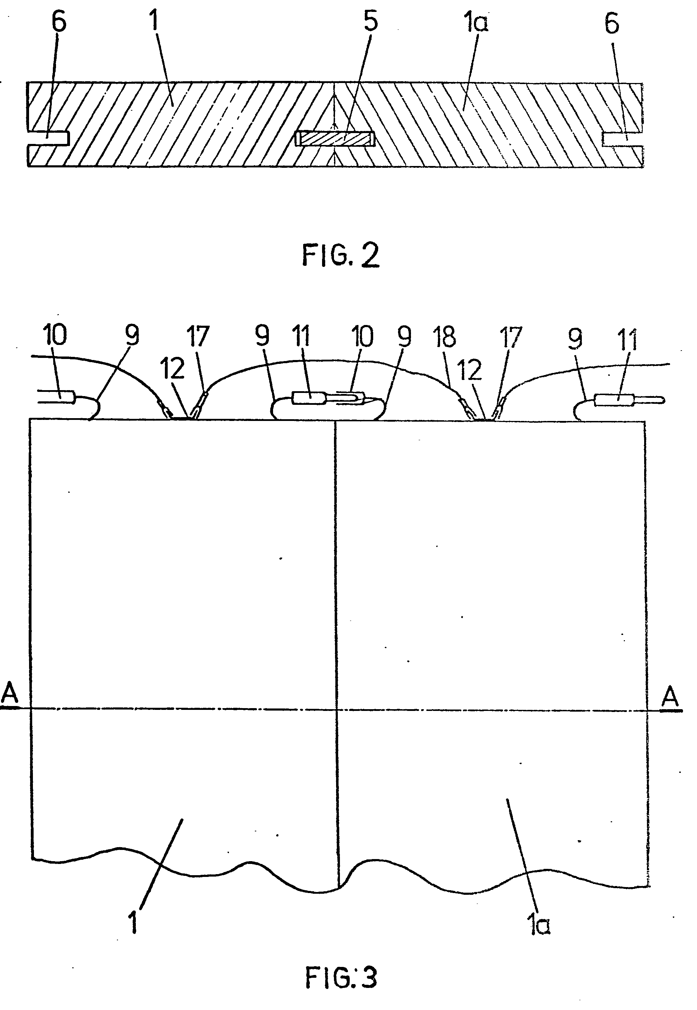

Wie aus Fig. 1 zu ersehen, weist das dargestellte Tepidarium einen die Wärmestrahlung reflektierenden Boden- und Deckenbelag 13 auf, während die Wände aus einzelnen leicht transportablen Flächenheizleitern in Form von elektrisch heizbaren Isolierplatten 1 von Wandhöhe zusammengesetzt und an ihren oberen sowie unteren Rändern senkrecht zwischen U-Schienen 2, 3 gehalten sind. Letztere sind ihrerseits mindestens an den vier Ecken des von ihnen eingeschlossenen Raumes an Stützen 4 befestigt, die zwischen Decke und Fussboden eingeklemmt sind. Um eine ebene wärmestrahlende Sichtfläche zu erhalten, sind die Isolierplatten 1, 1a gemäss Fig. 2 durch Feder 5 und Nut 6 aneinandergefügt. Ein Teil der Isolierplatten 1 ist als Tür mit in der Drehachse angeordneten Zapfen 7 ausgebildet, die in entsprechende Löcher 8 einer mit der U-Schiene 2 verbundenen zweiten U-Schiene 2a bzw. einer mit der U-Schiene 3 verbundenen Flachschiene 3a eingreifen. Die Tür ist von innen durch ein Schrankschloss verschliessbar, dessen Sperrstäbe oben und unten beim Abschliessen in entsprechende Löcher der Schienen 2a, 3a eingreifen. Zur Vermeidung von Zugluft sind die Fugen zwischen Tür und Wand mit Weichschaumstoff ausgefüllt.

Wie aus Fig. 3 ersichtlich, hat jede Isolierplatte 1, 1a an ihrem oberen Rand nahe der beiden Ecken je eine mit den Enden des metallischen Mäanderbandes verbundene isolierte Stromzuführungslitze 9, die auf der einen Plattenseite mit einer isolierten Buchse 10 und auf der anderen Plattenseite mit einem isolierten Stecker 11 versehen ist. Die Isolierplatten 1, 1a können daher durch Zusammenstecken der benachbarten Buchse 10 und des Steckers 11 in einfacher Weise elektrisch in Serie geschaltet werden. In der Mitte zwischen den Stromzuführungslitzen 9 ist bei jeder Isolierplatte 1, 1a eine mit dem Schutzleiterschirm verbundene doppelseitige Steckzunge 12 angebracht, die mittels mit Muffen 17 versehener Verbindungskabel 18 eine durchgängige Verbindung der Schutzleiterschirme mit dem Schutzleiter (Erde) gestatten. Alle Verbindungskabel 18 sind durch die U-Schiene 2 abgedeckt.

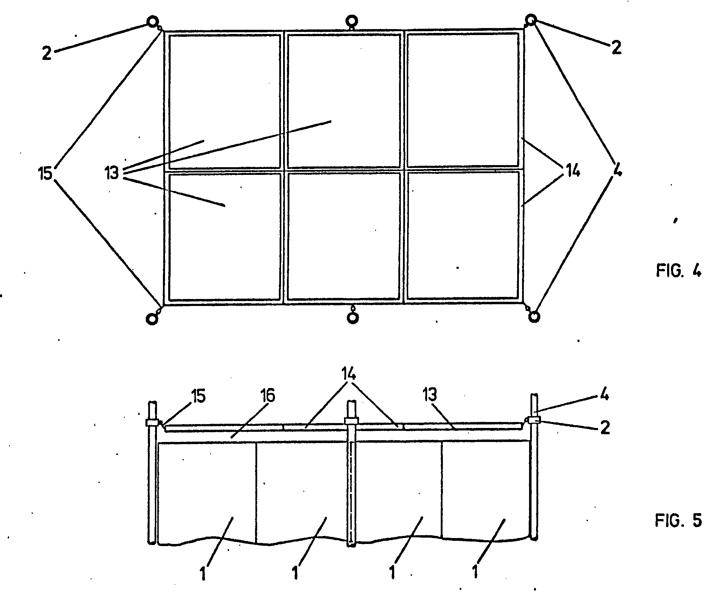

Wenn der von den Flächenheizleitern 1 eingeschlossene Raum oben nicht ebenfalls durch elektrisch heizbare Isolierplatten 1 abgedeckt ist, ist im Abstand zu den Wandoberkanten eine als Tepidariumsdecke dienende, beidseits strahlungsreflektierende Folie 13 angebracht, die, wie in Fig. 4 und 5 dargestellt, über zusammengesetzte Holzrahmen 14 gespannt ist. Letztere sind entweder direkt an der Decke befestigt oder mit Ösen 15 an den Stützen 4 aufgehängt. Aufgrund einer Luftoder Schaumstoffisolation und/oder Reflektion der von der Decke kommenden Wärmestrahlung nimmt die Folie 13 schnell die Temperatur der an ihr von unten vorbeistreichenden Luft an, so dass diese Luft nicht, wieder abgekühlt, in den Raum zurückfallen kann, sondern den Raum als Abluft durch die zwischen der Oberkante der Tepidariumswände und der Folie 13 belassenen Luftspalte 16 verlässt.

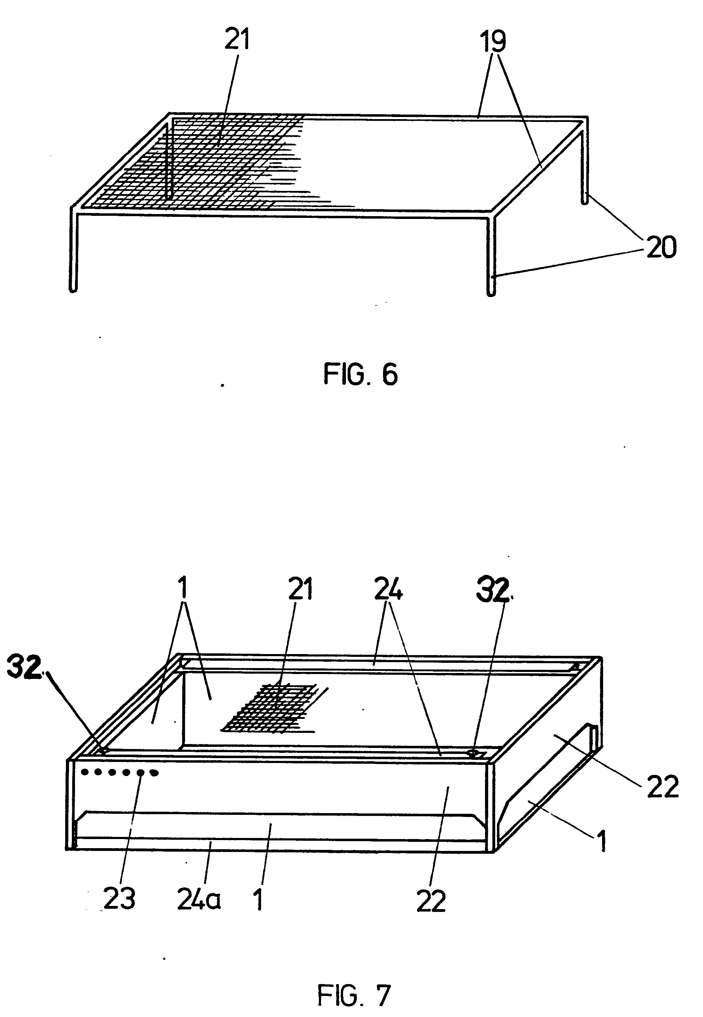

Um die Wärmestrahlung sowie die in ihrer Temperatur abgesenkte Raumluft dem auf einer Liege ruhenden menschlichen Körper nicht nur von oben, sonder auch von unten zukommen zu lassen, ist gemäss Fig. 6 ein Bettrahmen 19 im Tepidarium als Rohrrahmen mit Rohrfüssen 20 ausgebildet und mit einem gröberen, aus Kordel geknüpften, reissfesten Netz 21 bespannt. Dieses Kordelnetz 21 ist so stark über den Bettrahmen 19 gespannt, dass es unter dem Gewicht des darauf liegenden menschlichen Körpers nur wenig durchhängt und mindestens das Liegen auch auf der Seite zulässt. Die Wärmestrahlung des Tepidariums gelangt mittels Reflexion an der auf dem Boden ausgelegten strahlungsreflektierenden Folie 13 an die Körperauflageflächen.

Wenn die Wärmestrahlung des Tepidariums durch im Raum befindliche Gegenstände, z.B. einem danebenstehenden Bett mit normaler Matratze, zu stark vom Fussboden unter dem Bettrahmen 19 abgeschirmt ist, gelangt die abgewandelte Ausführungsform gemäss Fig. 7 nur Anwendung, bei der ein hölzerner Bettrahmen 22 höher ausgestaltet und mit dem Kordelnetz 21 überzogen ist, wobei letzteres aussen mit jeder Masche über den Kopf einer Linsenkopfschraube 23 gehängt ist. Um ein Durchbiegen der Bettrahmenlängsseiten bei Belastung des Kordelnetzes 21 durch den menschlichen Körper zu vermeiden, sind die Seitenteile des Bettrahmens 22 innen durch direkt unter dem Kordelnetz 21 angeschraubte Stahlwinkel 24 verstärkt. Unter dem Kordelnetz 21 geht die Wärmestrahlung von Flächenheizleitern 1 aus, die an den Innenflächen des Bettrahmens 22 angebracht sind, vom Kordelnetz 21 bis zum Fussboden reichen und in den Innenraum der Liege strahlen. Mindestens an der einen Rahmenlängsseite ist der betreffende Flächenheizleiter 1 (Isolierplatte) vertikal durch Kordelschrauben 32 verschiebbar, um die von aussen tangential in das Tepidarium eingeleitete kühle Zuluft dosierbar über einen schmalen bodenseitigen Luftspalt 24a ins Innere des Bettrahmens 22 eintreten zu lassen.

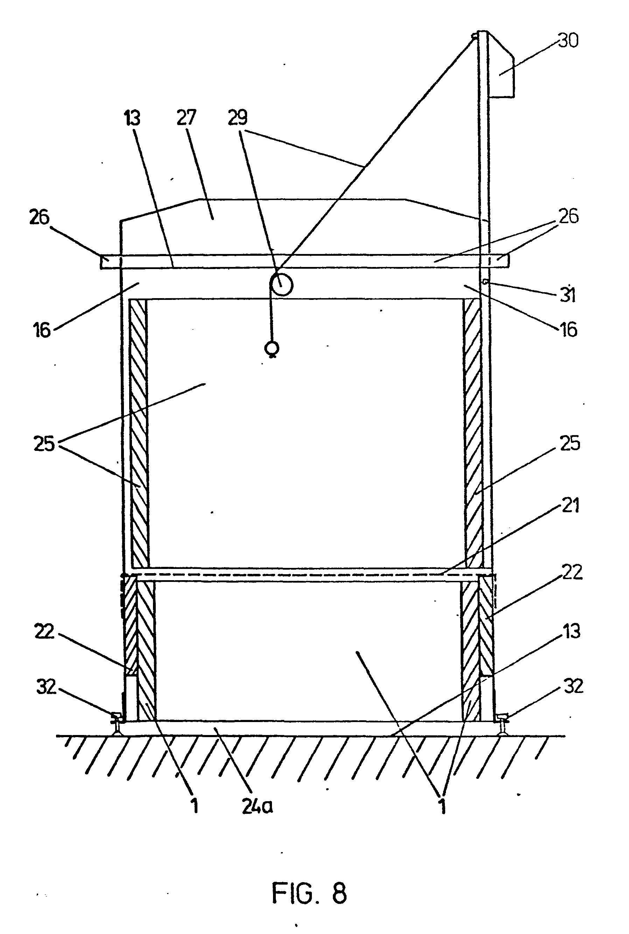

Bei der Ausführungsform gemäss Fig. 8 ist das Wärmestrahlungsfeld oberhalb des Kordelnetzes 21 anstatt durch das Tepidarium billiger durch einen zweiten Rahmen 25 aus elektrisch heizbaren Isolierplatten 1 sowie durch eine im Abstand darüber über einen horizontalen Rahmen 26 gespannte strahlungsreflektierende Folie 13 erzeugt. Zum Einsteigen in die Liege ist mindestens die eine Längsseite des Rahmens 25 mit Hilfe eines Kordelzuges 29 und eines Gegengewichtes 30 durch Drehung um die Achse 31 aufklappbar. Der Rahmen 25 kann aber auch mitsamt dem darüber angebrachten Folienrahmen 26 durch einen Schnurzug mit Gegengewicht zur raumseitigen Decke gezogen werden.

Die Luft der Umgebung dieser strahlungsklimatisierten Liege wird über den durch Kordelschrauben 32 grössenverstellbaren bodenseitigen Luftspalt 24a in den Innenraum der Liege eingelassen und verlässt diesen infolge des thermischen Auftriebes als wärmere Abluft durch den breiteren Luftspalt 16 zwischen der Oberkante des Rahmens 25 und der deckenseitigen strahlungsreflektierenden Folie 13.

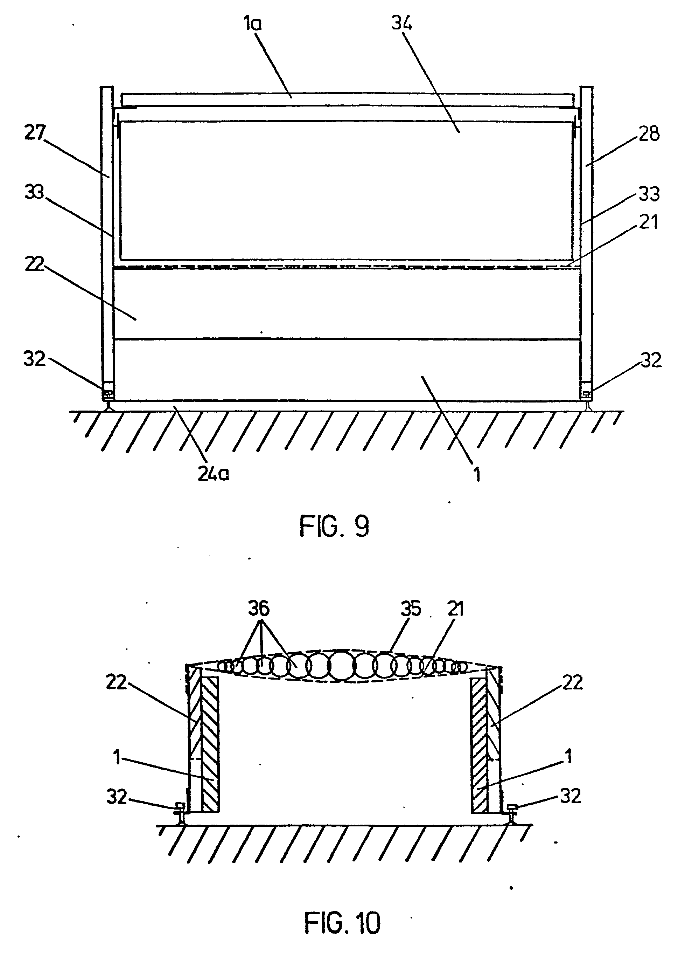

Die aus Fig. 9 ersichtliche abgewandelte Ausführungsform der strahlungsklimatisierten Liege unterscheidet sich von der zuvor beschriebenen dadurch, dass der aus den Isolierplatten 1 gebildete Rahmen 25 durch eine strahlungsreflektierende Schicht 33 am Kopfteil 27 und am Fussteil 28 des Bettrahmens 22 sowie durch herabhängende Rollos 34 aus strahlungsreflektierender Folie mindestens an einer Seite des Bettgestells ersetzt ist und dass die reflektierende Decke 13 durch aneinandergefügte, unterseitig elektrisch heizbare Isolierplatten 1a ersetzt ist.

Bei einer weiteren nichtdargestellten Ausführungsform der strahlungsklimatisierten Liege sind die Isolierplatten 1 des Rahmens 25 bzw. die strahlungsreflektierenden Rollos 34 wenigstens teilweise durch elektrisch heizbare durchsichtige Folien ersetzt, die, unter Strom gesetzt, den Raum oberhalb des Kordelnetzes 21 mit einer homogenen Wärmestrahlung konstanter Temperatur von etwa 30 bis 42 °C erfüllen. Diesem Zweck können halbleitende, durchsichtige Kunststoff-Folien oder zwei zusammengeklebte normale, glasklare Kunststoff-Folien dienen, in deren Klebeschicht dünne Heizdrähte mäanderförmig verlaufend eingebettet sind. Als Rollo ausgebildet, können diese Folien den Weg zum Ein- und Aussteigen in die bzw. aus der strahlungsklimatisierten Liege freigeben. Andernfalls kann zum Ein- und Aussteigen der mit strahlungsreflektierender Folie überzogene horizontale Rahmen 26 mitsamt den Heizfolien 13 durch einen Schnurrrollenzug vom Innenraum der Liege aus zur bauseitigen Decke hochgezogen werden.

Da sich das Kordelnetz 21 bei Belastung durch den menschlichen Körper im allgemeinen stark durchbiegt, wird das Liegen auf dem Bauch oder auf der Seite als unbequem empfunden. Diesem Umstand wird bei der Ausführungsform gemäss Fig. 10 dadurch abgeholfen, dass der Bettrahmen 22 mit zwei geknüpften Kordelnetzen 21, 35 bespannt ist, die durch in Längsrichtung liegende Schraubenfedern 36 aus dünnem nichtrostendem Stahldraht voneinander distanziert und an den Berührungsstellen fest mit den einzelnen Maschen der Kordelnetze 21, 35 verbunden sind. Man erhält so eine nach oben konvexe Matratze, die für Luft und Wärmestrahlung genügend durchlässig ist, um das Strahlungsklima von allen Seiten an den auf ihr liegenden meschlischen Körper gelangen zu lassen.

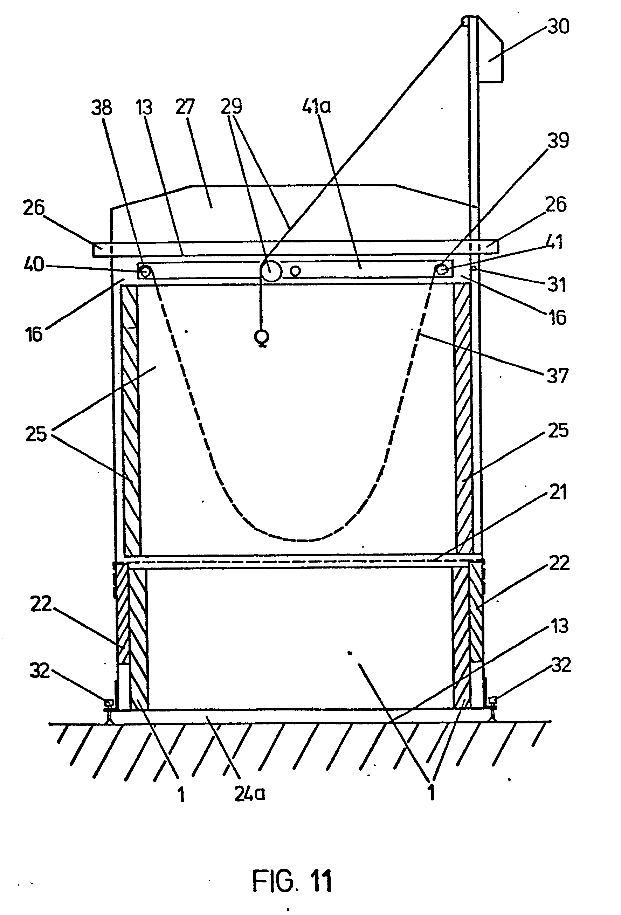

Eine andere Möglichkeit, im homogenen Strahlungsklima bequem auf der Seite und auf dem Bauch zu liegen, ist gemäss Fig. 11 mit wenigstens einem weiteren Netz 37 gegeben, das oberhalb des über den Bettrahmen 22 gespannten Kordelnetzes 21 Masche für Masche an Rohrbügeln 38, 39 befestigt und mit diesen an zwei horizontalen Metallrohren 40, 41 eines um eine feste Mittelachse drehbaren Rahmens 41a aufgehängt ist. Der besondere Vorteil dieser Art, Teile des Körpers aufzuhängen, besteht darin, dass sich der Rumpf beim Drehen aus der Bauchlage reibungslos auf dem tragenden Netz 37 abwickelt, dass Kopf und Rumpf für sich gestützt werden, dass die weibliche Brust in der Bauchlage frei herunterhängen und dass schliesslich das tragende Kordelnetz 37 bei der Aufhängung jeder Netzmasche speziellen Körperformen angepasst werden kann. Während das Netz 37 zur Aufhängung des Rumpfes aus fester Kordel geknüpft sein muss, genügt zur Stützung des Kopfes in der Seitenlage im allgemeinen ein wesentlich feineres Netz geringer Fadenstärke mit einer Maschenweite von wenigen Millimetern. In der Bauchlage kann der Kopf auch durch ein auf dem Kordelnetz 21 liegendes, mit Damast bezogenes Rosshaarkissen gestützt werden, das in der Mitte seines oberen Randes eine Einkerbung zur Aufnahme der Nase hat.

Bei dem Kordelnetz 37 unter dem Rumpf könnte die Haut bei den verhältnismässig grossen Drükken, mit denen die geknüpften Stellen des Netzes auf dem Arm, Brustkorb, Gesäss oder Oberschenkel aufliegen, verletzt werden, wenn der darauf Liegende sich in eine andere Lage bringt. Dies wird wirksam mit einem für Luft und Wärmestrahlung durchlässigen feinmaschigen Netz vermieden, das im Bereich der Auflagestellen des Körpers auf die grobmaschinen, tragenden Kordelnetze 37 gelegt und durch Befestigungen am gröberen Kordelnetz 37 gegen Verschiebung gesichert ist. In das über den Bettrahmen 22 gelegte Netz 21 ist aber nahe dem Rand der Isolierplatten 1 ein mehrere Zentimeter breiter Streifen eines Netzes mit grösserer Maschenweite eingesetzt, um das Aufsteigen der von den Heizplatten erwärmten Luft nicht übermässig zu hemmen.

Insgesamt bewirken die den meschlichen Körper tragende Netze während der Nacht eine willkommene Grossflächenmassage, die in Verbindung mit dem allseitig wirkenden homogenen Strahlungsklima zur Folge hat, dass Fettpolster in wenigen Wochen verschwinden, ohne eine faltige Haut zu hinterlassen, und dass eine jahrelang bestehende Zellulite abgebaut wird.

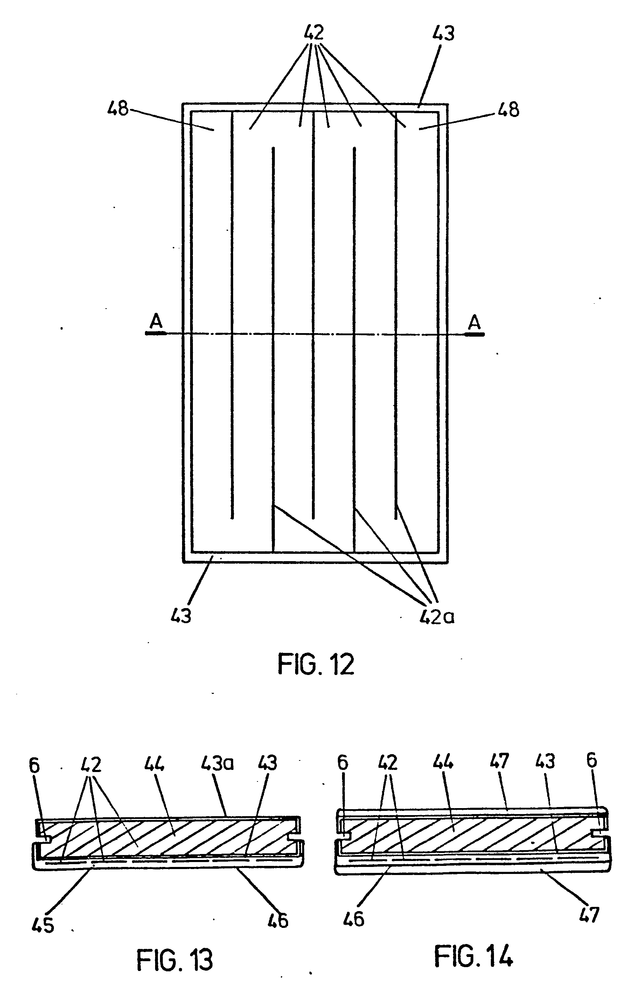

Wie auf Fig. 12 ersichtlich, ist ein als Flächenheizleiter zur Anwendung gelangendes dünnes metallisches Mäanderband 42 durch elektrisches Ausbrennen schmaler geradliniger Rillen 42a hergestellt, indem äquidistant angeordnete Elektroden mit metallisch gefassten Graphitminen unter elektrischem Strom über die metallische Kaschierung einer isolierenden Trägerfolie 43 gezogen werden und der elektrische Kontakt zur metallischen Kaschierung durch eine metallische Walzenelektrode vermittelt wird, die gleichzeitig mit Anpressdruck auf der Kaschierung der Trägerfolie 43 abrollt.

Die in dieser Weise mit den Mäanderbändern 42 versehene Trägerfolie 43 wird gemäss Fig. 13 maschinell mit einem breiteren Band einer durchschlagfesten Isolierfolie 45 überzogen, die zuvor auf ihrer dem Mäanderband 42 abgewandten Seite mit einer als Schutzleiterschirm 46 dienenden Metallfolie kaschiert wurde. Die aus den Teilen 43, 42, 45 und 46 kombinierte Folienbahn wird dann ebenso wie eine zweite, elektrisch nichtleitende Folienbahn 43a gleicher Breite in eine sog. Doppelbandanlage eingeführt, in der durch Einspritzen von Schaumstoffmaterial zwischen den beiden Bahnen ein Hartschaumstrang 44 entsteht, der eine mechanisch feste Verbindung mit den beiden Bahnen eingeht und an den Kanten gemäss Fig. 13 einerseits von der Isolierfolie 45 und anderseits von der Folie 43a eingehüllt ist.

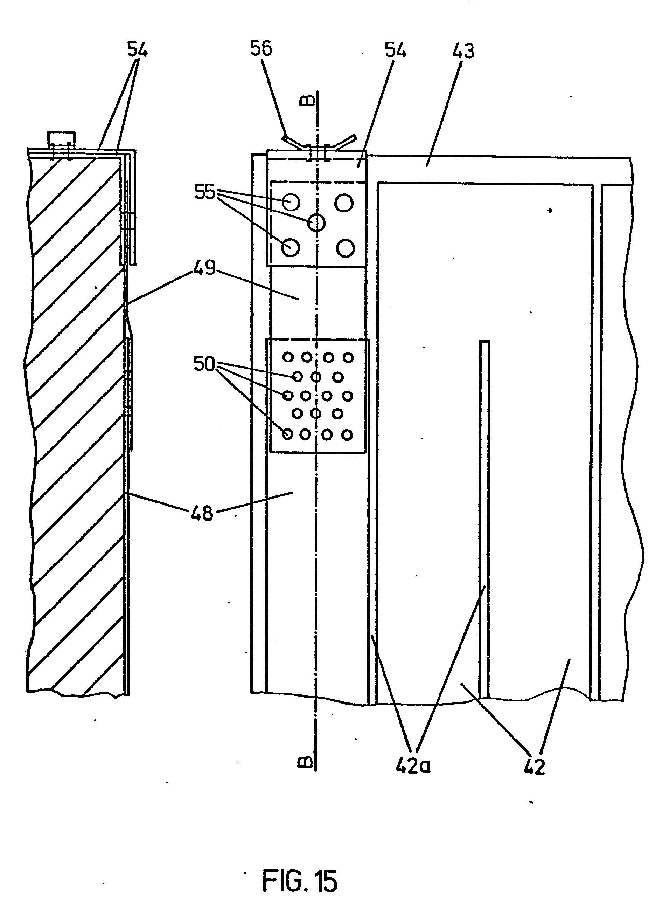

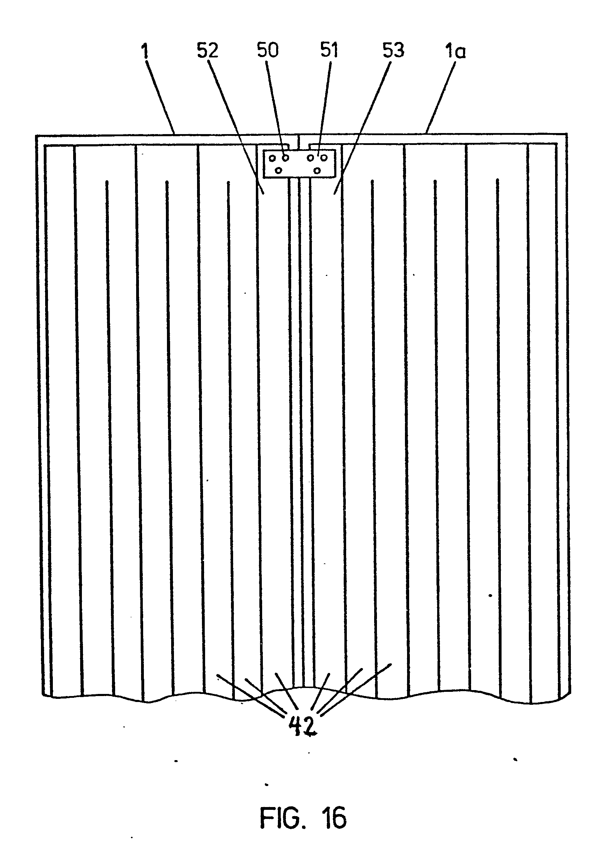

Durch anschliessendes Zerschneiden des so gebildeten Hartschaumstranges 44 längs der senkrechten Mittellinien zwischen den geradzahligen bzw. den ungeradzahligen Folienausnehmungen erhält man die elektrisch heizbaren Isolierplatten 1 bzw. 1a. Die elektrischen Anschlüsse zu den Mäanderbandenden 48 dieser Isolierplatten werden nach Fig. 15 durch Stromzuführungsblechstreifen 49 gleichen Materials vermittelt, die mit den Mäanderbandenden 48 durch eine grössere Zahl von Schweisspunkten verbunden sind. Die Verschweissung ist mit auf den Stromzuführungsblechstreifen 49 aufgesetzten, metallisch gefassten Graphitminen-Elektroden bewerkstelligt, indem über jede dieser Elektroden eine Kondensatorentladung zum Stromzuführungsblech 49 geleitet wurde. Die darunter befindliche dünne Metallfolie des Mäanderbandes 48 wird hierbei längs kleiner kreisförmiger Schweissnähte 50 kontaktfest mit dem Stromzuführungsblechstreifen 49 verbunden. Durch den gleichen Arbeitsprozess werden nach Fig. 16 die räumlich benachbarten Mäanderbandenden 52, 53 zweier Isolierplatten 1, 1a nach ihrer Montage an feste Wände mit je einem Stromzuführungsblechstreifen 51 elektrisch miteinander in Serie geschaltet, bevor die Isolierfläche 45 an diesen Stellen angeklebt wird und die Isolierplatten 1, 1a mit einer Edelputzschicht 47 überzogen werden.

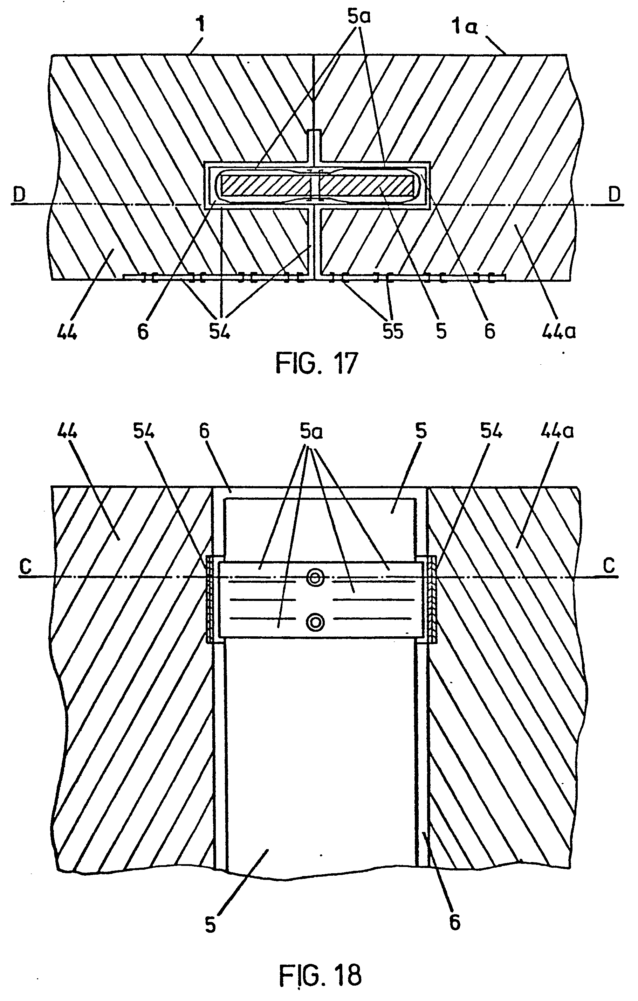

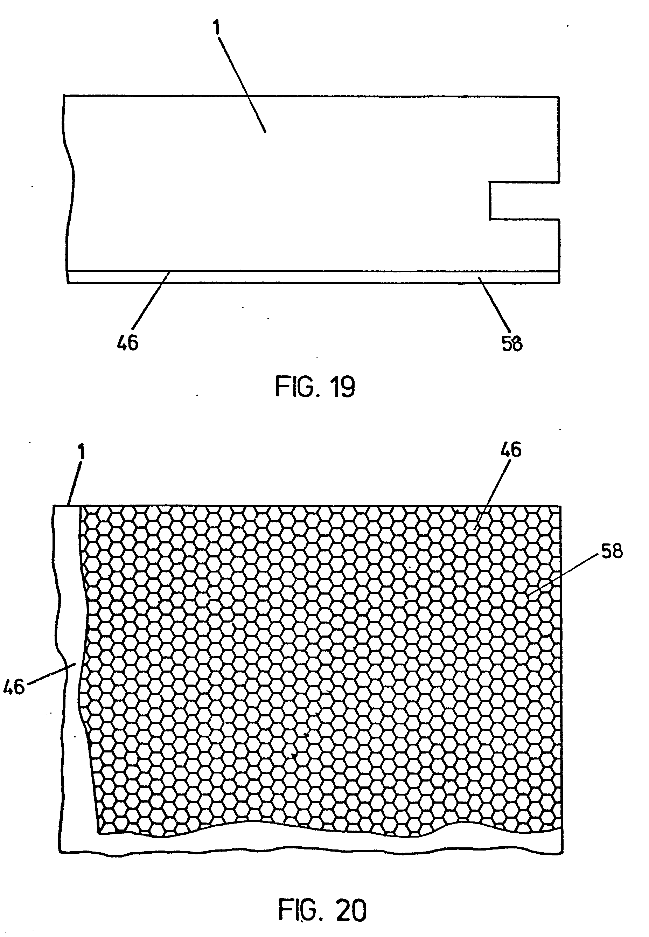

Dort, wo der Anschluss zu einem flexiblen Zuführungskabel herzustellen ist, ist der Stromzuführungsblechstreifen 49 von einem stärkeren Kupferblech 54 eingefasst und durch Nieten 55 eingeklemmt, die gleichzeitig die Verbindung mit dem Kabel herstellen, sei es nun direkt durch Festklemmen des Kabelendes oder indirekt über eine Steckzunge 56. Wenn Mäanderband 42 und Stromzuführungsblechstreifen 49 aus Aluminium bestehen, ist letzterer nach Fig. 15 von einem Kupalblech 54 eingefasst und mit mehreren Nieten 55 zusammengepresst. In all diesen Fällen ist das den Stromzuführungsblechstreifen 49 einfassende Blech 54 mechanisch fest mittels einer abhärtenden Kunststoffpaste mit der Hartschaumplatte 44 verbunden. Im besonderen geschieht dies nach Fig. 17 in der Nut 6 der Hartschaumplatte 44, wobei der elektrische Kontakt von der einen selbsttragenden elektrisch heizbaren Isolierplatte 1 zur nächsten Isolierplatte 1a durch ein an der Feder 5 angebrachtes, in Fig. 18 erkennbares längsgeschlitztes Federblech 5a beim Aneinanderfügen der Hartschaumplatten 44, 44a vermittelt ist. Für die Stromzuführung kann ebenso auf der Steckseite der Feder 5 ein längsgeschlitztes Federblech 5a vorgesehen sein. Anstelle einer elektrischen Verbindung zum Federblech 5a auf der anderen Seite ist dann an diesem ein Schraubkontakt oder eine Steckzunge zum Anschluss des Zuführungskabels angebracht.

Wenn die Isolierplatten 1 auf feste ebene Wände aufzukleben sind, genügt es, die Schutzleiterfolie 46 nach dem Aufkleben eines Glasfasernetztes durch Auftragen einer mindestens 1 mm starken, abhärtenden Edelputzschicht 47 vor mechanischer Beschädigung zu schützen. Demgegenüber ist bei einer freitragenden Verwendung der Isolierplatten 1 die Edelputzschicht 47 gemäss Fig. 14 auf beiden Seiten aufgetragen, um eine Verkrümmung der Platten 1 zu verhüten.

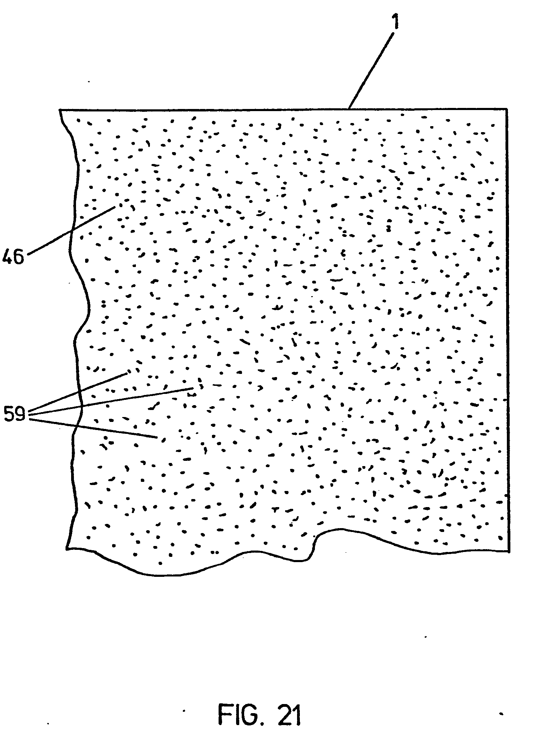

Wie schon dargelegt, wird erfindungsgemäss die Absenkung der Raumlufttemperatur gegenüber der Strahlungstemperatur mittels Behinderung des Wärmeüberganges von der elektrisch geheizten Seite der Isolierplatte 1 zur Raumluft gefördert. Diese Behinderung des Wärmeübergangs lässt sich auf dreifache Weise erzielen, nämlich einerseits mit einem Bienenwabennetz 58 aus dünner Metallfolie, das gemäss Fig. 19 und 20 auf die beheizte Strahlseite 46 der Isolierplatte 1 aufgeklebt ist, oder anderseits durch ein dünnes, gegebenenfalls metallisiertes Kunststoffnetz mit einer Maschenweite von etwa 1 mm und demgegenüber sehr kleiner Fadenstärke, das im Abstand von einigen Millimetern vor der beheizten Strahlseite 46 ausgespannt ist, oder schliesslich durch Kunstfaserstücke 59 von wenigen Millimetern Länge, die elektrostatisch auf die mit selbsthärtender Klebschicht versehene Strahlschicht 46 aufgestäubt sind, wobei sich die Kunstfaserstücke 59 gemäss Fig. 21 in statistisch gleichmässiger Verteilung mit einem mittleren gegenseitigen Abstand von Faserlänge senkrecht auf die Plattenoberfläche stellen.

Der vorgesehenen automatischen Regelung der mittleren Strahlungstemperatur liegt der Gedanke zugrunde, die bezüglich ihres elektrischen Leitwertes temperaturabhängigen metallischen Flächenheizleiter elektrisch als Prüfling an eine vom Heizstrom gespeiste Wheatstone'sche Brücke mit einem niederohmigen und einem hochohmigen Brückenzweig zu schalten, wobei mindestens der mit dem Flächenheizleiter in Reihe liegende Brückenwiderstand temperaturabhängig ist. In der Aufheizperiode ist dann die Spannung über dem Nullzweig der Brücke ein Mass für die mittlere Temperatur der in Reihe geschalteten Flächenheizleiter und zugleich ein Mass für die mittlere Strahlungstemperatur der wärmestrahlenden Platten. Das Verschwinden der Spannung im Nullzweig zu einem Zeitpunkt, in dem die Flächenheizleiter die am Potentiometer eingestellte Solltemperatur erreichen, kann daher zur Unterbrechung des Heizstromes benutzt werden. Zur Prüfung der Brückenverstimmung während der Zeit, in der sich die stromlos gemachten Heizleiter abkühlen, wird der Heizstrom automatisch in Zeitabständen von etwa einer Sekunde für die Dauer von wenigen Hundertstel Sekunden und beim Wiederauftreten einer bestimmten Spannung im Nullzweig der Brücke eine neue Heizperiode lang eingeschaltet.

Eine Einrichtung zur Stabilisierung der mittleren Strahlungstemperatur auf einen beliebig einstellbaren Sollwert war bislang noch nicht bekannt. Es war lediglich schon vorgeschlagen worden, den temperaturabhängigen Widerstand des Heizdrahtes in einer elektrisch heizbaren Glasscheibe als Fühlorgan zur thermostatischen Regelung der Temperatur des Heizdrahtes zu benutzen. Die mittlere Strahlungstemperatur der Glasscheibe war damit aber noch längst nicht kontrolliert, sondern abhängig von ihrer Wärmeabgabe an die Umgebung. Erst die Kombination des an sich bekannten Regelvorganges mit der vollständigen Belegung des Wärme abstrahlenden Querschnittes durch Heizfolienmäander und der vorgesehenen unteren Begrenzung des Wärmedurchgangsleitwertes des Isolation von Schutzleiterfolie und des wärmeleitenden Überzuges hohen Wärmeemissionsvermögens führt zur gewünschten Stabilisierung der mittleren Strahlungstemperatur. Es kann damit die Strahlungstemperatur homogen temperierter Heizflächen der Raumumschliessung unabhängig von der Raumlufttemperatur, der Raumbesetzung mit Personen, der Aussentemperatur und der Einstrahlung von aussen durch ein Fenster automatisch auf wenige Zehntel Grad genau konstant gehalten werden.

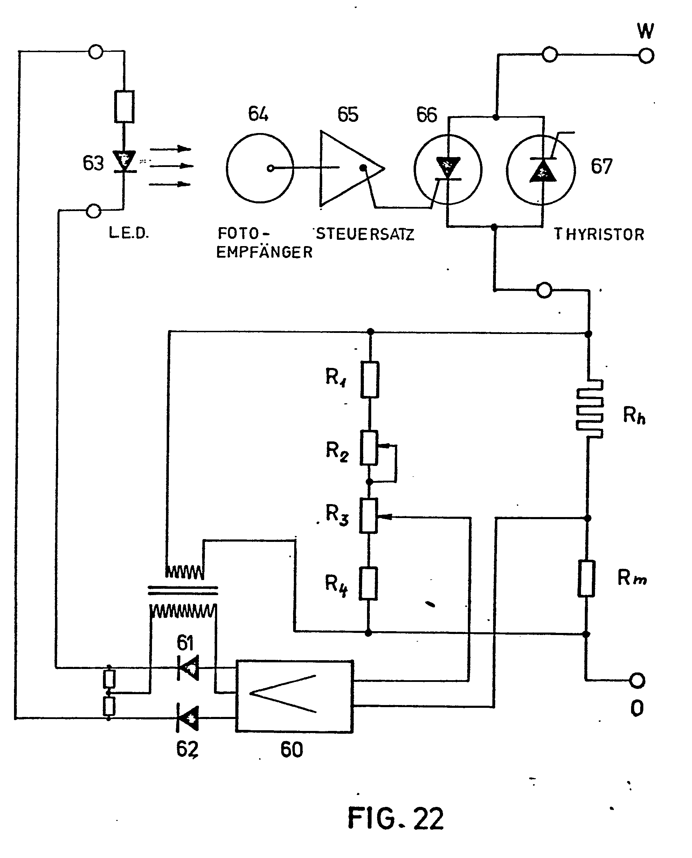

Bei der aus Fig. 22 ersichtlichen Prinzipschaltung, mit der die thermostatische Regelung der mittleren Strahlungstemperatur zu errechnen ist, wird die aus dem Widerstand $R_h$ der Flächenheizleiter, dem ihm gegenüber kleinen temperaturabhängigen Widerstand $R_m$, den hochohmigen Widerständen $R_1$, $R_2$, $R_4$ und dem Potentiometer $R_3$ gebildete Brücke über zwei antiparallel geschaltete Thyristoren 67, 66 vom Wechselstromnetz mit der Phase W und dem Null-Leiter O gespeist. Der Nullzweig der Brücke steuert über einen Operationsverstärker 60 eine aus zwei Gleichrichtern 62, 61 bestehende Gleichrichterbrücke, welche die verstärkte Wechselspannung des Nullzweiges phasengerecht in eine Gleichspannung der einen oder anderen Polarität verwandelt und die Thyristoren 67, 66 über eine lichtemittierende Diode 63, einen Fotoempfänger 64 und einen Steuersatz 65 zündet, wenn die Wheatstone'sche Brücke im Sinne eines zu kleinen Widerstandes der Flächenheizleiter verstimmt ist. Die Thyristoren 67, 66 werden nicht mehr gezündet, sobald die Spannung im Nullzweig der Brücke verschwindet bzw. nach Durchlaufen des Brückengleichgewichtes die Phase der Wechselspannung im Nullzweig um 180° verschoben ist und die lichtemittierende Diode 63 kein Licht mehr emittiert. Um die Verstimmung der Brücke während des Abkühlens der Flächenheizleiter ständig zu kontrollieren, ist im Steuersatz 65 ein Impulsgeber vorgesehen, der die Thyristoren 66, 67 in Zeitabständen von etwa einer Sekunde für eine Dauer von wenigen Hundertstel Sekunden zündet und eine neue Aufheizperiode einleitet, sobald die Wheatstone'sche Brücke infolge Abkühlung der Flächenheizleiter einen bestimmten Verstimmungsgrad unterschreitet.

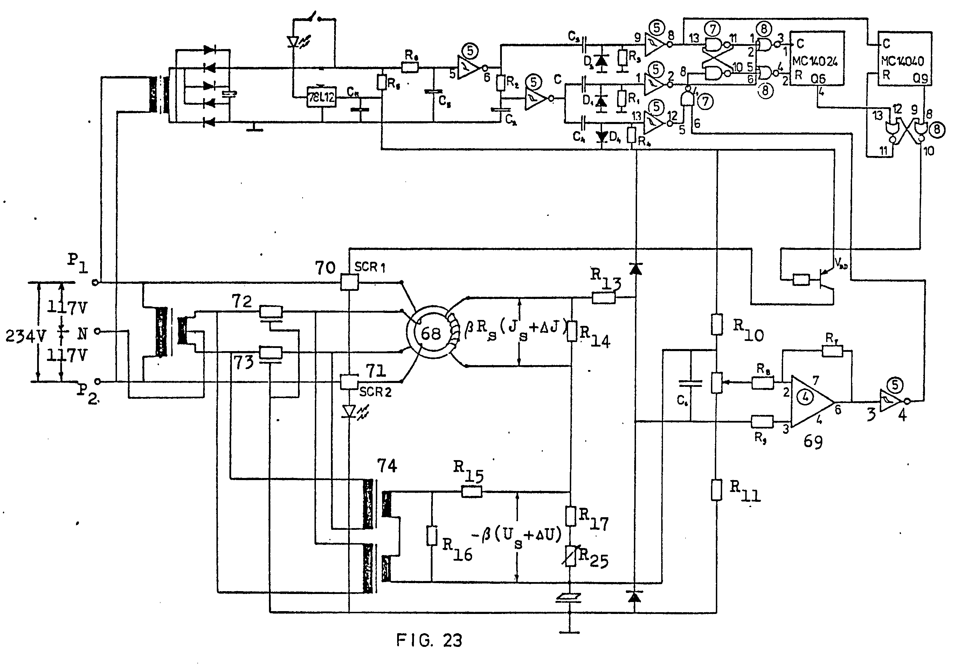

Die aus Fig. 23 ersichtliche abgewandelte Ausführungsform einer Prinzipschaltung zur thermostatischen Regelung der mittleren Strahlungstemperatur arbeitet wegen ihrer geringen Anfälligkeit auf Störungen im Versorgungsnetz ausserordentlich zuverlässig. Hierbei ist anstelle des energieverbrauchenden Vorschaltwiderstandes $R_m$ ein Stromwandler 68 zwischen Phase und den beiden Heizleitergruppen 72, 73 geschaltet, die von den beiden um 180° gegeneinander verschobenen Phasen $P_1$, $P_2$ eines amerikanischen Wechselstromnetzes für 2 × 117 V gespeist sind.

Die Abweichungen $\Delta R = R - R_s$ des Widerstandes R beider Gruppen von dem der Solltemperatur $t_s$ entsprechenden Sollwert $R_s$ wird durch die Differenz der gleichzeitig gemessenen Spannung $U = U_s + \Delta U$ an der Serie der Heizleitergruppen 72, 73 und der Spannung $R_s$ ($J_s + \Delta J$) erfasst; denn die Temperaturabweichung $\Delta t$ von der Solltemperatur $t_s$ ergibt sich mit dem Temperaturkoeffizienten $\alpha$ der Aluminium-Heizleiter

$$\alpha \cdot \Delta t = \frac{\Delta R}{R_s}$$

$$= \frac{1}{R_s}(R - R_s)$$

$$= \frac{1}{R_s}(\frac{U_s + \Delta U}{J_s + \Delta J} - R_s)$$

$$= \frac{1 + \Delta U/U_s}{1 + \Delta J/J_s} - 1 \quad .$$

Da $\Delta U/U_s$ und $\Delta J/J_s$ in der Regel sehr viel kleiner als 1 sind, kann man sich mit dem ersten Glied der Reihenentwicklung von

$$\frac{1}{1 + \Delta J/J_s}$$

begnügen und hierfür schreiben:

$$\alpha \cdot \Delta t = (1 + \Delta U/U_s)(1 - \Delta J/J_s) - 1$$

$$= 1 + \Delta U/U_s - (1 + \Delta J/J_s)$$

$$= \frac{1}{U_s} \cdot [(U_s + \Delta U) - R_s(J_s + \Delta J)] \quad .$$

Die Abweichung $\Delta t$ der Strahlungstemperatur der Flächenheizleiter von der eingestellten Solltemperatur ist also proportional der Differenz eines Spannungssignals $\beta$ ($U_s + \Delta U$) und eines sog. Stromsignals $\beta R_s$ ($J_s + \Delta J$), welche durch Reihenschaltung des Ausganges vom Stromwandler 68 und des Ausganges der Spannungswandler 74 nach entsprechender Dämpfung des Spannungssignals durch das Dämpfungsglied mit $R_{15}$ als Vor-

$$\frac{\beta \cdot \Delta U}{\beta U_s} = \frac{\Delta R_{25}}{R_{15} + R_{17} + R_{25} + \Delta R_{25}} \qquad \frac{R_{15} + R_{17} + R_{25}}{R_{17} + R_{25}} = -\alpha \cdot \Delta t$$

Falls $R_{15}$ sehr viel grösser als $R_{17}$, also die Sekundärspannung der Spannungswandler verhältnismässig gross gewählt wird, geht die Bedingungsgleichung über in

$$\frac{\Delta R_{25}}{R_{17} + R_{25}} = -\alpha \cdot \Delta t$$

d.h. die kompensierende Abweichung $\Delta R_{25}$ ist dann direkt proportional der Abweichung $\Delta t$ von der Solltemperatur $t_s$, und das Potentiometer $R_{25}$ kann unmittelbar auf Solltemperatur geeicht werden.

Wegen der Kapazität, durch die ein Teil des Heizstromes zu dem mit dem Schutzleiter verbundenen Heizleiterschirm abfliesst, kommt es beim Durchlaufen der Solltemperatur $t_s$ nicht zu einer vollkommenen Kompensation von Strom- und Spannungssignal; vielmehr eilt das Stromsignal während des Aufheizens der an den Heizleitergruppen liegenden Netzspannung ein wenig voraus, so dass der resultierende Vektor der Spannungsdifferenz bei der Temperatur $t_S$ etwa um 90° gegenüber dem Spannungssignal verschoben ist. Demzufolge setzt das Rechtecksignal hinter dem Schmitt-Trigger(5)3–4 während der Anheizperiode früher ein als das von der Netzspannung herrühwiderstand und der Serie aus $R_{17}$ und dem Potentiometerwiderstand $R_{25}$ als Querwiderstand am Eingang des Operationsverstärkers 69 gebildet wird. Die Dämpfung dieses Dämpfungsgliedes und das Übersetzungsverhältnis der Spannungswandler 74 kann so gewählt werden, dass für $\Delta U = O$ und $\Delta J = O$ Spannungs- und Stromsignal betragsmässig gleich gross sind, sich also gegenseitig kompensieren.

Von den beiden am Eingang des Operationsverstärkers 68 liegenden Wechselspannungen überwiegt während der thermostatischen Regelung das Spannungssignal $\beta$ ($U_s + \Delta U$), solange $\Delta t$ positiv ist, die mittlere Strahlungstemperatur der Heizleiter also grösser ist als die am Potentiometer $R_{25}$ eingestellte Solltemperatur $t_2$; umgekehrt überwiegt mit der entgegengesetzten Phase das Stromsignal $\beta R_S$ ($J_s + \Delta J$), solange die mittlere Strahlungstemperatur t kleiner ist als die Solltemperatur$_s$.

Bei konstanter Netzspannung ist $\Delta U = O$ und die Änderung des Stromsignals $\beta R_S \Delta J = -\beta U_s \alpha \cdot \Delta t$, also proportional $-\Delta t$. Mithin ist die auf das Stromsignal $R_s J_s$ bezogene Änderung.

$$\frac{\beta R_s \cdot \Delta J}{\beta R_s \cdot J_s} = -\alpha \cdot \Delta t$$

Diese relative Abweichung des Stromsignals kann durch eine gleich grosse relative Abweichung vom Spannungssignal $\beta U_s$ kompensiert werden; es ergibt sich daher für die Eichung des linearen Potentiometers $R_{25}$ in Strahlungstemperatur die Bedingungsgleichung

rende inverse, verzögerte Referenzsignal hinter dem Schmitt-Trigger (5)11–10 und das zum gleichen Zeitpunkt einsetzende, auf 1 ms begrenzte Signal hinter den Schmitt-Trigger (5)13–12. Die Impulse des Referenzsignals können jedoch das logische Tor (7)4 erst passieren, sobald die Heizleitergruppen die Solltemperatur überschritten haben und die zweite Flanke des hinter dem Schmitt-Trigger(5)3–4 auftretenden Signals der Drehung des Vektors der Differenzspannung entsprechend mit dem Referenzsignal hinter dem Schmitt-Trigger(5)13–12 koinzidiert. Damit ist der Weg des Referenzsignals zum Zähler MC 14 024 freigegeben. Die von der Netzspannung herrührenden O-Impulse hinter dem Schmitt-Trigger(5)9–8, die den Zähler MC 14 040 passieren und über den Transistor die Solid-State-Relais 70, 71 und die Kontroll LED zünden, werden aber erst unterbrochen, wenn eine grössere Zahl von Aus-Impulsen (z.B. 32/O-Impulse) nacheinander das logische Tor (7)4 passiert hat und am Zähler MC 14 024 eingetroffen ist. Es entsteht dann nämlich am Ausgang dieses Zählers ein Stop-Signal, das mit einem Impuls aus dem Zähler MC 14 040 koinzidiert und diesen über den Eingang R für die Dauer von 5,1 s sperrt. Auf diesem an sich bekannten watchdog-System beruht die Unempfindlichkeit gegenüber zufälligen Spannungsspitzen im Versorgungsnetz und die sichere Einleitung der Abkühlperiode. Am Ende dieser Abkühlperiode gibt der Zähler MC 14 040 wieder den Weg für die Zündungsimpulse der Solid-State-Relais frei, und es beginnt damit ein neuer Aufheizvorgang zur Aufrechterhaltung der mittleren Strahlungstemperatur $t_s$.

Ein- und ausgeschaltet wird der Heizbetrieb mit dem Hauptschalter, der den Spannungsstabilisator mit dem Versorgungsnetz verbindet und den erwähnten Transistor sowie den Operationsverstärker 69 mit der erforderlichen Speisespannung versorgt.

Ausser dem Schutz der thermostatischen Temperaturregelung gegenüber Störungen im Versorgungsnetz, die bei Stromausfall während des Nachtschlafs im Tepidarium automatisch durch ein Alarmhorn gemeldet werden müssen, ist noch ein zuverlässiger Brandschutz vorgesehen. Unter der auf die Hartschaumplatte 44 aufgezogenen, unbrennbaren Edelputzschicht 47 erstickt ein Feuer, das durch anhaltenden Funkendurchschlag der Isolierfolie 45 zwischen der metallischen Mäanderfolie 42 und dem mit Schutzleiter verbundenen Schirm 46 ausgelöst ist. Eine weitere Sicherung gegen Brandentwicklung ist gegeben, wenn die elektrische Heizleistung beim Anheizen der freistrahlenden Heizplatten nicht den dreifachen Wert der mittleren Heizleistung übersteigt. Denn nur wesentlich grössere Anheizleistungen vermögen aufgrund der positiven Temperaturkoeffizienten der aus Aluminium gefertigten Heizmäander 42 eine instabile Erwärmung herbeizuführen, die eine starke Überhitzung an einer begrenzten Stelle zur Folge haben kann. Eine solche Überhitzung würde aber die Isolation der zwischen Heizmäander 42 und Schutzleiterschirm 46 liegenden Polyesterfolie zum Schmelzen bringen und einen zum Schutzleiter abfliessenden Fehlerstrom im Gefolge haben. Aus diesem Grunde ist ein zusätzlicher Brandschutz gewährleistet, wenn die mit Schutzleiterschirm versehenen Isolierplatten 1 in allen Fällen über mindestens einen Fehlerstromschutzschalter an das Starkstromnetz angeschlossen werden, der die Isolierplatten 1 sofort vom Starkstromnetz abschaltet, sobald der Fehlerstrom 30 mA überschreitet.

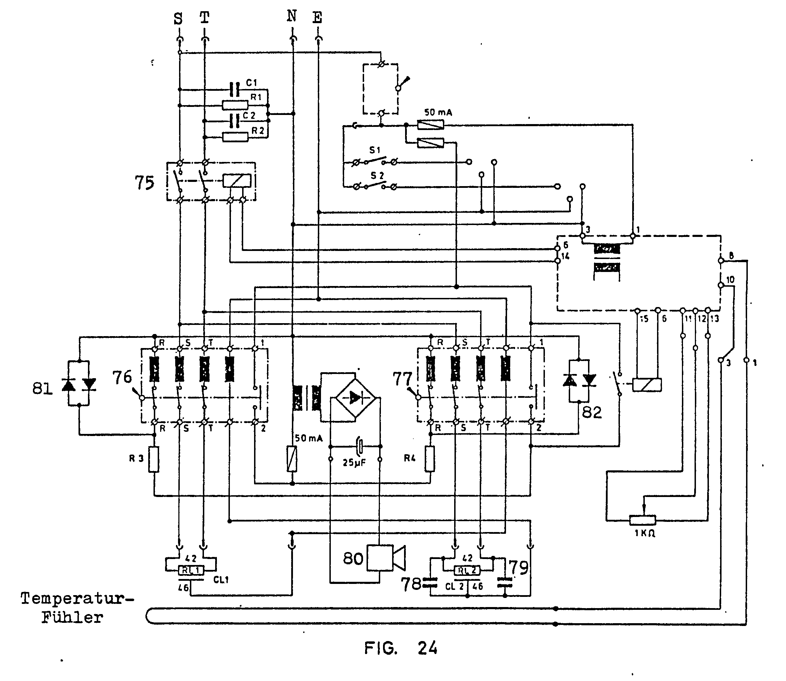

Im Prinzipschaltbild gemäss Fig. 24 sind die Flächenheizleiter 42 bzw. die elektrisch heizbaren Isolierplatten 1 in zwei unter sich widerstandsgleiche Gruppen Gp 1, Gp 2 über die Fehlerstrom-Schutzschalter 76, 77 und das Quecksilberrelais 75 an die Phasen S, T des Drehstromnetzes gelegt. Da der zum Schutzleiterschirm abfliessende kapazitive Strom meist grösser als 30 mA ist, muss er bei beiden Gruppen durch einen fremden, über die Wicklung N geführten kapazitiven Strom kompensiert werden, wenn er die Schtzschalter 76, 77 nicht auslösen soll. Diese Kompensation wird jeweils durch den zum Schutzleiter fliessenden kapazitiven Strom der anderen Gruppe bewerkstelligt, nachdem die kapazitiven Ströme der beiden Gruppen durch zusätzliche Ableitkondensatoren 78, 79 an der erdkapazitätsärmeren Gruppe Gp 2 nach Betrag und Phase auf ‰ genau einander angeglichen wurden. Unter diesen Umständen können dann kapazitive Ströme von mehr als 70 mA, die von den Phasen S, T über die Heizleiterkapazitäten CL 1, CL 2 durch die Wicklung N des Fehlerstromschutzschalters der jeweils anderen Gruppe fliessen, nicht mehr einen magnetischen Fluss in den Ringkernen erzeugen, der zur Auslösung der Schutzschalter 76, 77 führt. Die Schutzleiterschirme weisen hierbei lediglich eine Wechselspannung auf, die kleiner als 20 mV ist.

Wenn z.B. bei der Gruppe Gp 1 durch eine örtliche Überhitzung oder eine Überspannung, welche die Isolation der zwischen Heizmäander und Schutzleiterschirm liegenden Isolierfolie durchschlägt bzw. zum Schmelzen bringt, ein Fehlerstrom in der Gruppe Gp 1 auftritt, der 30 mA übersteigt, werden beide Fehlerstromschutzschalter 76, 77 ausgelöst, weil für den reellen Ableitstrom die Kompensation nicht mehr gegeben ist. Die mit der Auslösung erfolgte Unterbrechung des Heizstromes wird durch das Ertönen des Alarmhornes 80 kundgemacht, denn durch das Schliessen der Kontakte 1, 2 im Schutzschalter 76 wird das Alarmhorn 80 unter Strom gesetzt.

Erfahrungsgemäss können auch kurzzeitige Spannungsspitzen im Drehstromnetz die Fehlerstromschutzschalter 76, 77 auslösen, weil mit den Ableitkondensatoren 79, 79 nicht der Kettenleiter nachgebildet wird, dem die Gruppe Gp 1 mit ihren Heizwiderständen und verteilten Kapazitäten zuzuordnen wäre. Diese Spannungsspitzen lassen sich aber grösstenteils mit den antiparallel zur Wicklung R geschalteten Dioden 81, 82 unschädlich machen, ohne die Ansprechempfindlichkeit auf reelle Fehlerströme zu schmälern.

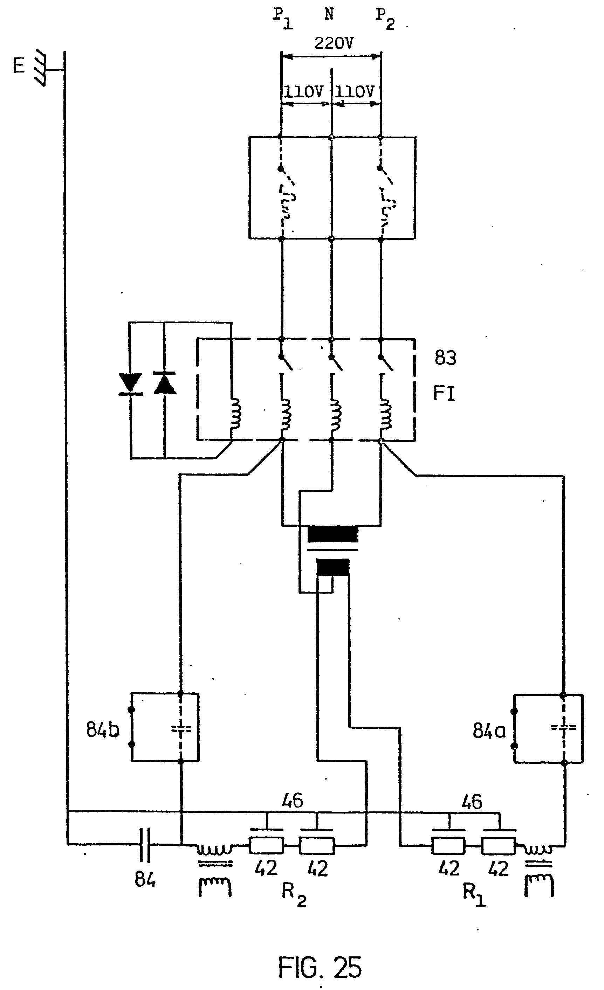

Beim Anschluss der Flächenheizleiter 42 an ein amerikanisches Starkstromnetz mit zwei um 180° verschobenen Phasen $P_1$, $P_2$ können die unter sich widerstandsgleichen Gruppen Gp 1, Gp 2 von in Serie oder parallel geschalteten Isolierplatten 1 gemäss Fig. 25 über einen einzigen Fehlerstromschutzschalter 83 an die beiden Phasen und den Null-Leiter N geschaltet werden, wenn deren effektive Schirmkapazitäten durch einen Zusatzkondensator 84 aufeinander abgeglichen werden und sich die sie durchfliessenden Ströme im Null-Leiter gegenseitig aufheben. Ein in einer der beiden Gruppen auftretender, zum Schutzleiter E abfliessender reeller Fehlerstrom, der 30 mA übersteigt, stört das magnetische Gleichgewicht im Ringkern des Fehlerstromschutzschalters 83 und löst dessen Schalter aus.

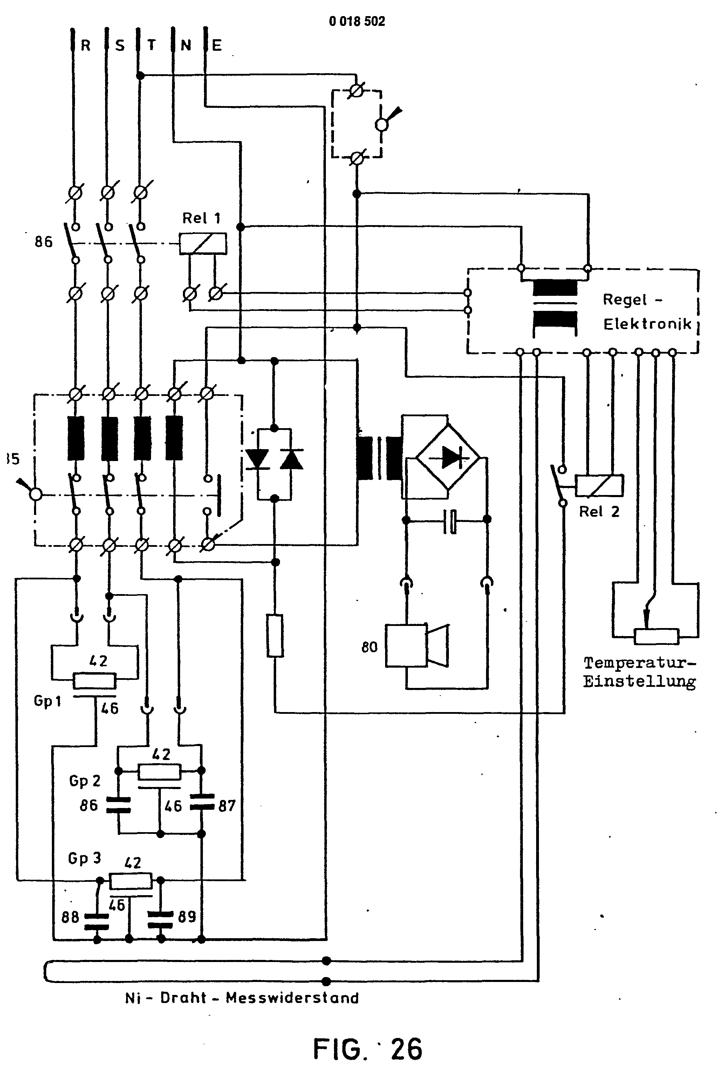

Auch beim Anschluss an die drei Phasen des Drehstromnetzes können drei unter sich widerstandsgleiche Gruppen Gp 1, Gp 2 und Gp 3 von Isolierplatten 1 gemäss Fig. 26 durch einen einzigen Fehlerstromschutzschalter 85 gegenüber einem Fehlerstrom grösser als 30 mA gesichert werden, wenn deren Schutzleiterkapazitäten durch Zusatzkondensatoren 86, 87, 88 und 89 so einander angeglichen werden, dass sich die kapazitiven Stöme im Schutzleiter gegenseitig aufheben. Der Fehlerstromschutzschalter 85 wird aber sofort ausgelöst, sobald in einer der drei Gruppen ein reeller Strom zum Schutzleiter abfliesst, der grösser als 30 mA ist.

Der entscheidende Vorteil der in Fig. 24, 25 und 26 dargestellten Schaltungen besteht darin, dass die Fehlerstromschutzschalter nicht mehr durch jene Frequenzen ausgelöst werden, die beim Ein- und Ausschalten des Heizstromes durch das Quecksilber-Relais 75 oder bei Schaltstörungen im Kraftstromnetz entstehen.

**Patentansprüche**

1. Verfahren zur homogenen Strahlungsklimatisierung eines allseits umschlossenen Raums, insbesondere eines Tepidariums, bei dem die aus Wänden, Decke und Boden bestehende, weitgehend wärmeisolierte Raumumschliessung mittels elektrischer Flächenbeheizung mindestens eines grösseren Teils derselben sowie mittels für Wärmestrahlung reflektierender und/oder remittierender Überzüge auf den nichtbeheizten Flächen auf eine einheitliche Strahlungstemperatur gebracht wird, wobei mindestens ein Teil der Beheizung über die Wände erfolgt, die Raumluft auf einer gegenüber der mittleren Strahlungstemperatur mindestens 4°C tieferen Temperatur gehalten und die Abluft des Raumes zwischen Wand und Decke abgeführt wird, dadurch gekennzeichnet, dass die Vereinheitlichung der Strahlungstemperatur durch Verstärkung der Grenzschicht an den beheizten Wandflächen mittels eines Luftpolsters zur Behinderung des konvektiven Wärmeübergangs an die Raumluft und durch reflektierende Ausbildung des unbeheizten Bodens erfolgt und dass die Zuluft mit einer gegenüber der eingestellten Strahlungstemperatur um mindestens 4°C tieferen Temperatur tangential zum Boden an oder nahe der Unterkante der Wände eingeführt wird.

2. Verfahren nach Anspruch 1, bei dem der elektrische Widerstand zur Darstellung des Istwertes in einer thermostatischen Regelung der Strahlungstemperatur verwendet wird, dadurch gekennzeichnet, dass die thermostatische Regelvorrichtung die Flächenheizleiter während eines Nulldurchgangs des vom Versorgungsnetz bezogenen Wechselstroms vom Wechselstromnetz abschaltet, sobald der Widerstand der Flächenheizleiter für eine vorgegebene Zahl aufeinanderfolgender Perioden des Wechselstroms den am Regler eingestellten Sollwert des Kompensationswiderstands überschritten hat, und erst wieder mit dem Wechselstromnetz verbindet, wenn eine vorbestimmte Zahl von Perioden vergangen ist.

3. Einrichtung zur homogenen Strahlungsklimatisierung eines allseits umschlossenen Raums, insbesondere eines Tepidariums, mit einer aus Wänden, Decke und Boden bestehenden, weitgehend wärmeisolierten Raumumschliessung, deren dem Raum zugewandte Seiten mindestens zu einem grösseren Teil mit mindestens teilweise an den Wänden angeordneten Flächenheizleitern belegt und deren nichtbeheizte Flächen für Wärmestrahlung reflektierend und/oder remittierend ausgebildet sind, und mit einer Abführung der Abluft des Raums zwischen Wänden und Decke, dadurch gekennzeichnet, dass an den beheizten Flächen (46) der Wände (1) oder in einem Abstand von einigen Millimetern davon Mittel (58, 59) zur Behinderung der Konvektion ohne Behinderung des Strahlungsdurchgangs angeordnet sind, dass der unbeheizte Boden (13) reflektierend ausgebildet ist und dass an oder nahe der Unterkante der Wände (1) grössenverstellbare Öffnungen (24a) zur tangential zum Boden erfolgenden Luftzufuhr vorgesehen sind.

4. Einrichtung nach Anspruch 3, dadurch gekennzeichnet, dass die Mittel zur Behinderung der Konvektion ohne Behinderung des Strahlungsdurchgangs aus einem Bienenwabennetz (58) aus dünner Metallfolie bestehen, das auf die Strahlfläche (46) der Flächenheizleiter (1) aufgeklebt ist.

5. Einrichtung nach Anspruch 3, dadurch gekennzeichnet, dass die Mittel zur Behinderung der Konvektion ohne Behinderung des Strahlungsdurchgangs aus einem dünnen Kunststoffnetz bestehen, das im Abstand von einigen Millimetern vor der Strahlfläche (46) der Flächenheizleiter (1) ausgespannt ist.

6. Einrichtung nach Anspruch 3, dadurch gekennzeichnet, dass die Mittel zur Behinderung der Konvektion ohne Behinderung des Strahlungsdurchgangs durch Kunstfaserstücke (59) von einigen Millimetern Länge gebildet sind, die elektrostatisch auf die mit selbsthärtender Klebschicht versehene Strahlfläche (46) der Flächenheizleiter (1) aufgestäubt sind.

7. Einrichtung nach einem der Ansprüche 3 bis 6, gekennzeichnet durch eine Montage der Wände des Tepidariums mit einzelnen leicht transportablen Flächenheizleitern in Form von elektrisch heizbaren Isolierplatten (1) von Wandhöhe, die seitlich mit Feder (5) und Nut (6) aneinandergefügt und an ihren oberen sowie unteren Rändern zwischen U-Schienen (2, 3) gehalten sind, die ihrerseits an zwischen bauseitiger Raumdecke und Fussboden eingeklemmten Stützen (4) befestigt sind, und durch in der Drehachse der elektrisch flächenbeheizten Tür befindliche Zapfen (7), die in entsprechende Löcher (8) der U-Schienen (2, 3) eingreifen.

8. Einrichtung nach einem der Ansprüche 3 bis 7, gekennzeichnet durch einen im Tepidarium frei aufgestellten, durch Winkeleisen (24) verstärkten Bettrahmen (22), der mit einem den menschlichen Körper tragenden Kordelnetz (21) bespannt und an seinen senkrechten Innenflächen mit den elektrisch heizbaren Isolierplatten (1) versehen ist, die mit ihren Oberkanten bis an das Kordelnetz (21) und mit ihren Unterkanten bis zu dem strahlungsreflektierenden Boden (13) heranreichen, wobei mindestens eine der an der Längsseite des Bettrahmens (22) angebrachten Platten (1) höhenverstellbar ist und am Boden die grössenverstellbare Öffnung (24a) bildet, der kühle Zuluft durch einen isolierten Kanal direkt von aussen gesondert zuführbar ist.

9. Einrichtung nach einem der Ansprüche 3 bis 8, gekennzeichnet durch einen zweiten, in der Höhe mindestens dem ersten Rahmen (22) entsprechenden Rahmen (25) aus senkrechten Isolierplatten (1, 1a) direkt oberhalb des Kordelnetzes (21), der wenigstens auf seiner einen Längsseite durch einen Schwenkhebel mit Gegengewicht (30) aufklappbar bzw. als Ganzes hochziehbar ist und oberseitig eine Decke aus Flächenheizleitern (1) oder einen mit reflektierender Folie (13) überzogenen horizontalen Rahmen (26) so trägt, dass zwischen der Decke und den Oberkanten der Längsseiten des Rahmens (25) ein etwa handbreiter Abluftspalt (16) verbleibt.

10. Einrichtung nach Anspruch 8 oder 9, gekennzeichnet durch ein über den Bettrahmen (22) bzw. über dessen Kordelnetz (21) gespanntes zweites grobmaschiges Kordelnetz (35) und durch mehrere ineinandergreifende Schraubenfedern (36), die in Rahmenlängsrichtung ausgerichtet zwischen den beiden Kordelnetzen (21, 35) untergebracht und mit ihren einzelnen Windungen an die Maschen der Kordelnetze (21, 35) so angeheftet sind, dass eine nach oben konvexe luftdurchlässige Matratze gebildet ist.

11. Einrichtung nach Anspruch 9 oder 10, gekennzeichnet durch wenigstens ein weiteres grobmaschiges Kordelnetz (37) zur Aufnahme von Bauch und Oberschenkel in der Bauchlage, das als Schaukel oder als in sich geschlossenes Band oberhalb des über den Bettrahmen (22) gespannten Kordelnetzes (21) an einem um die längere Symmetrieachse drehbaren Rahmen (41a) bzw. an zwei horizontalen Rohren (40, 41) aufgehängt ist, die über dem Bettrahmen (22 bzw. 25) parallel zu dessen Längsseiten am Kopfteil (27) sowie am Fussteil (28) befestigt sind.

12. Einrichtung nach einem der Ansprüche 3 bis 11, dadurch gekennzeichnet, dass der Flächenheizleiter durch eine auf eine Trägerfolie (43) aufkaschierte dünne Metallfolie (42) gebildet ist, die durch elektrisches Ausbrennen von schmalen Rillen (42a) mittels über diese Folie gezogener metallisch gefasster Graphitminenelektroden in ein als Flächenheizleiter dienendes Mäanderband verwandelt ist.

13. Einrichtung nach Anspruch 12, gekennzeichnet durch einen die Längskanten einer Hartschaumplatte (44) umfassenden Isolierüberzug (45) über dem Flächenheizleiter (42), der seinerseits auf der dem Heizleiter abgewandten Seite mit einer Metallfolie (46) zum Anschluss an Erde kaschiert ist, und durch dünne Einlageblätter über den Mäanderbandenden (48), die ein Festkleben des Isolierüberzuges (45) an den Ecken der Hartschaumplatten (44) verhindern.

14. Einrichtung nach Anspruch 12 oder 13, gekennzeichnet durch Stromzuführungsstreifen (49) aus einer dickeren flexiblen Folie des gleichen Materials wie das Mäanderfolienband (42), die an den beiden Bandenden (48) durch Kondensatorenentladungen über aufgesetzte metallisch gefasste Graphitminen an mehreren Punkten angeschweisst sind, wobei anstelle der dünnen Metallfolie des Mäanderbandendes (48) der dickere Stromzuführungsstreifen (49) als Gegenelektrode dient und längs kleiner kreisförmiger Schweissnähte (59) mit den dünnen Mäanderbandenden (48) der dickere Stromzuführungsstreifen (49) als Gegenelektrode dient und längs kleiner kreisförmiger Schweissnähte (50) mit den dünnen Mäanderbandenden (48) eine feste metallische Verbindung bildet.

15. Einrichtung nach einem der Ansprüche 3 bis 14 zur Durchführung des Verfahrens gemäss Anspruch 2, dadurch gekennzeichnet, dass der durch die Flächenheizleitergruppen (72, 73) fliessende Heizstrom J über einen Stromwandler (68) ein Stromsignal $\beta R_s (J_s + \Delta J)$ an einen Operationsverstärker (69) für die thermostatische Steuerung der Strahlungstemperatur der Flächenheizleiter über Solid-State-Relais (70, 71) liefert, dass dem Stromsignal ein Spannungssignal $\beta (U_s + \Delta U)$ hinzugefügt wird, das von der über den Flächenheizleitergruppen liegenden Spannung herrührt und über Spannungswandler (74) um 180° phasenverschoben in den Eingangskreis des Operationsverstärkers (69) gelangt, wobei das Spannungssignal durch ein Dämpfungsglied mit $R_{15}$ als Vorwiderstand und mit der Serie aus $R_{17}$ und dem den Sollwert $R_s$ des Gesamtwiderstandes der Heizleitergruppen anzeigenden Potentiometerwiderstand $R_{25}$ als Querwiderstand dermassen gedämpft ist, dass sich Strom- und Spannungssignal im Eingangskreis des Operationsverstärkers (69) im Falle $\Delta U = O$, $\Delta J = O$ und $\Delta t = O$ gegenseitig aufheben und dass das Ausgangssignal des Operationsverstärkers (69), durch den angeschlossenen Schmitt-Trigger (5)3–4 in ein Rechtecksignal verwandelt, zusammen mit einem gegen die Netzspannung durch $R_2$ und $C_2$ verzögerten Rechtecksignal, das durch die Diode $D_4$, den Widerstand $R_4$ und den Schmitt-Trigger (5)13–12 auf eine Dauer von etwa 1 ms begrenzt ist, einem logischen Tor (7)4 zugeführt wird, welches letzteres Signal erst durchlässt, wenn das Signal aus dem Schmitt-Trigger (5)3–4 durch die mit wachsender Temperatur der Heizleitergruppen (72, 73) zunehmende Verzögerung mit dem Signal aus dem Schmitt-Trigger (5)13–12 koinzidiert, wobei eine grössere Zahl dieser Impulse nacheinander in den Zähler MC 14 024 gelangen muss, ehe dieser ein Stopp-Signal zur Unterbrechung der Passage der Zündungsimpulse für die Solid-State-Relais (70, 71) an einen zweiten Zähler MC 14 040 abgibt, der die Unterbrechung mehrere Sekunden lang aufrechterhält.

16. Einrichtung nach Anspruch 15, dadurch gekennzeichnet, dass die relative Abweichung des Stromsignals

$$\frac{\beta R_s \cdot \Delta J}{R_s J_s} = -\alpha \cdot \Delta t$$

zur Eichung des linearen Potentiometers $R_{25}$ in Sollwerte $t_s$ der Strahlungstemperatur benutzt wird, indem davon Gebrauch gemacht wird, dass jede relative Abweichung des Stromsignals durch eine gleich grosse relative Abweichung des Spannungssignals

$$\frac{\beta \cdot \Delta U}{U_s} = \frac{\Delta R_{25}}{R_{15} + R_{17} + R_{25} + \Delta R_{25}} \cdot \frac{R_{15} + R_{17} + R_{25}}{R_{17} + R_{25}}$$

mit einer entsprechenden Änderung des Potentiometers $R_{25}$ zu kompensieren ist.

17. Einrichtung nach einem der Ansprüche 3 bis 16, dadurch gekennzeichnet, dass die Isolierplatten (1) eines Raumes oder eines Tepidariums über zwei 5-Pol-Fehlerstromschutzschalter (76, 77) vom Kraftstromnetz in zwei Gruppen mit nahezu gleichem Gesamtwiderstand ihrer Flächenheizleiter (42) heizbar sind, deren über die Schirmfolien (46) zum Schutzleiter (E) abfliessender kapazitiver Strom durch jeweils zwischen Polleiter und Schutzleiter geschaltete Zusatzkondensatoren (78, 79) auf Betrags- und Phasen-Gleichheit abgeglichen ist, wobei der für jede Gruppe vorgesehene Fehlerstromschutzschalter nicht von kapazitiven Erdströmen, die grösser sind als der Nenn-Auslösestrom, auslösbar ist, sofern der kapazitive Erdstrom der einen Gruppe jeweils ohne Schalter an die Nullzweigwicklung des Fehlerstromschutzschalters der anderen Gruppe geführt ist, und dass etwaige Anfälligkeiten auf kurzzeitige Netzspannungsspitzen durch Überbrückung je einer der vier Wicklungen der beiden Fehlerstromschutzschalter mit antiparallel geschalteten Dioden (81, 82) behoben sind.

**Claims**

1. A method of homogeneously air conditioning by radiation a room which is closed on all sides, particularly a tepidarium, in which the largely thermally insulated boundaries of the room, comprising walls, ceiling and floor, are brought to a uniform radiation temperature by means of electric surface heating of at least a greater portion thereof and by means of coatings which are applied to the non-heated surfaces and which reflect and/or return thermal radiation, at least a portion of the heating being effected by way of the walls, the air in the room being kept at a temperature which is at least 4 °C lower than the average radiation temperature, and the exhaust air from the room being discharged between the wall and the ceiling, characterised in that the radiation temperature is rendered uniform by reinforcing the boundary layer at the heated wall surfaces by means of an air cushion for preventing convective transfer of heat to the air in the room and by reflective construction of the unheated floor, and in that the intake air is introduced tangentially to the floor or near to the bottom edge of the walls at a temperature which is at least 4 °C lower than the adjusted radiation temperature.

2. A method as claimed in claim 1, in which the electrical resistance is used to represent the actual value in thermostatic regulation of the radiation temperature, characterised in that the thermostatic regulating device disconnects the surface heat conductors from the a.c. mains supply during a zero passage of the a.c. current drawn from the mains supply, as soon as the resistance of the surface heat conductors has exceeded the desired value of the compensating resistance, set by the regulator, for a predetermined number of successive periods of the a.c. current, and reconnects the surface heat conductors to the a.c. mains supply only when a predetermined number of periods has elapsed.

3. An apparatus for the homogeneous radiation air conditioning of a room which is closed on all sides, particularly a tepidarium, having largely thermally insulating boundaries which comprise walls, ceiling and floor and whose sides facing the room are covered over at least a greater portion thereof with surface heat conductors which are disposed at least partially on the walls, and the non-heated surfaces of the said boundaries are constructed so as to reflect and/or return thermal radiation, and the exhaust air from the room is discharged between walls and ceiling, characterised in that means (58, 59) for obstructing convection without obstructing the transmission of radiation are disposed on the heated surfaces (46) of the walls (1) or at a distance of a few millimetres therefrom, in that the unheated floor (13) is of reflective construction, and in that openings (24a) adjustable in size are provided on or near the bottom edge of the walls (1) for feeding air tangentially to the floor.

4. An apparatus as claimed in claim 3, characterised in that the means for obstructing convection without obstructing transmission of radiation comprises a honeycomb network (58) of thin metal film which is glued to the radiation-emissive surface (46) of the surface heat conductors (1).

5. An apparatus as claimed in claim 3, characterised in that the means for obstructing convection without obstructing transmission of radiation comprises a thin plastics net which is stretched at a distance of a few millimetres in front of the radiation-emissive surface (46) of the surface heat conductors (1).

6. An apparatus as claimed in claim 3, characterised in that the means for obstructing convection without obstructing transmission of radiation are formed by synthetic fibre pieces (59) of a few millimetres in length which are electrostatically dusted onto the radiation-emissive surface (46), provided with a self-hardening adhesive layer, of the surface heat conductors (1).

7. An apparatus as claimed in one of the claims 3 to 6, characterised by a mounting on the walls of the tepidarium, of individual, readily transportable surface heat conductors in the form of electrically heatable insulating plates (1) of wall height which are joined together laterally by tongue (5) and groove (6) and held at their upper and lower edges between U-section rails (2, 3) which are in turn secured to supports (4), in use clamped between the ceiling of the room and the floor, and by pins (7) which are located in the pivot axis of the electrically surface heated door and which engage corresponding holes (8) in the U-section rails (2, 3).

8. An apparatus as claimed in one of the claims 3 to 7, characterised by a bed frame (22) which is freely installed in the tepidarium and which is reinforced by angle irons (24) and is covered with a cord net (21) carrying the human body and whose vertical inner surfaces are provided with the electrically heated insulating plates (1) whose upper edges extend up to the cord net (21) and whose lower edges extend down to the radiation-reflective floor (13), at least one of the plates (1) mounted on the longitudinal side of the bed frame (2) being vertically adjustable and forming at the floor the opening (24a) which is adjustable in size and to which cool intake air may be fed separately from the outside through an insulated passage.

9. An apparatus as claimed in one of the claims 3 to 8, characterised by a second frame (25) which is equal in height to at least the first frame (22) and which comprises vertical insulating plates (1, 1a) and is disposed directly above the cord net (21), at least one longitudinal side of which second frame can be swung up, or the entire second frame may be raised, by a pivoted lever having a counterweight (30), and the top of the second frame carries a cover comprising surface heat conductors (1), or a horizontal frame (26) coated with a reflective film (13), such that an exhaust air gap (16) of approximately a hand's width remains between the cover and the upper edges of the longitudinal sides of the frame (25).

10. An apparatus as claimed in claim 8 or 9, characterised by a second coarse-meshed cord net (35) which is stretched over the bed frame (22) or over the cord net (21) thereof, and by a plurality of interengaging helical springs (36) which are aligned in the longitudinal direction of the frame and accommodated between the two cord nets (21, 35), the individual turns of which helical springs are attached to the meshes of the cord nets (21, 35) to form an upwardly convex mattress which is permeable to air.

11. An apparatus as claimed in claim 9 or 10, characterised by at least one further coarse-meshed cord net (37) for receiving the abdomen and thighs when in the prone position and which is suspended as a swing or as a self-contained band above the cord net (21), stretched across the bed frame (22), from a frame (41a) which is rotatable about the longer axis of symmetry, or from two horizontal tubes (40, 41) which are secured above the bed frame (22 or 25) to the head part (27) and to the foot part (28) thereof and parallel to its longitudinal sides.

12. An apparatus as claimed in one of the claims 3 to 11, characterised in that the surface heat conductor is formed by a thin metal foil (42) which is laminated on to a substrate film (43) and which is converted to a meandering strip, serving as surface heat conductor, by electrically burning-out narrow grooves (42a) by means of metal-mounted pencil-lead-like graphite electrodes which are drawn across the said foil.

13. An apparatus as claimed in claim 12, characterised by an insulating coating (45) which embraces the longitudinal edges of a rigid foam plate (44) and which extends across the flat heat conductor (42) and whose side remote from the heat conductor is in turn laminated with a metal foil (46) for connection to earth, and by thin insert sheets which extend across the ends (48) of the meandering strip and which prevent the insulating coating (45) from adhering to the corners of the rigid foam plates (44).

14. An apparatus as claimed in claim 12 or 13, characterised by current-supply strips (49) which are made from a thicker flexible foil of the same material as that of the meandering foil strip (42) and which are welded to the two ends (48) of the meandering strip at a plurality of points by capacitor discharge by way of metal-mounted pencil-lead-like graphite electrodes applied thereto, wherein the thicker current-supply strip (49) serves as a counter-electrode instead of the thin metal foil of the end (48) of the meandering strip, and the thicker current-supply strip (49) serves as counter-electrode along small circular welded seams (59) with the ends (48) of the meandering strip, and forms a rigid metal connection with the thin ends (48) of the meandering strip along small circular welded seams (50).

15. An apparatus as claimed in one of the claims 3 to 14, for performing the method as claimed in claim 2, characterised in that the heating current J flowing through the surface heat conductor groups (72, 73) supplies a current signal $\beta R_s$ $(J_s + \Delta J)$ by way of a current transformer (68) to an operational amplifier (69) for the thermostatic control of the radiation temperature of the surface heat conductors by way of a solid-state relay (70, 71), that there is added to the current signal a voltage signal $\beta$ $(U_s + \Delta U)$ which originates from the voltage across the surface heat conductor groups and which, phase-shifted through 180° by voltage transformer (74), is applied to the input circuit of the operational amplifier (69), the voltage signal being attenuated by an attenuator comprising $R_{15}$ as a series resistor and the series combination comprising $R_{17}$ and the potentiometer resistor $R_{25}$ serving as a shunt resistor and indicating the desired value $R_S$ of the total resistance of the heat conductor group, such that the current signal and the voltage signal mutually cancel one another in the input circuit of the operational amplifier (69) when $\Delta U = O$, $\Delta J = O$ and $\Delta t = O$, and in that the output signal of the operational amplifier (69), converted to a square-wave signal by the connected Schmitt trigger (5)3–4, is fed to a logic gate (7)4 together with a square-wave signal which is delayed by $R_2$ and $C_2$ relative to the mains voltage and which is limited to a duration of approximately 1 ms by the diode $D_4$, the resistor $R_4$ and the Schmitt trigger (5)13–12, which logic gate transmits the latter signal only when the signal from the Schmitt trigger (5)3–4 coincides with the signal from the Schmitt trigger (5)13–12 as a result of the delay increasing with increasing temperature of the heat conductor groups (72, 73) a larger number of these pulses having to arrive successively in the counter MC 14 024 before the said counter applies a stop signal for interrupting the passage of the firing pulses for the solid-state relay (70, 71) to a second counter MC 14 040 which maintains the interruption for several seconds.

16. An apparatus as claimed in claim 15, characterised in that the relative variation of the current signal

$$\frac{\beta R_s \cdot \Delta J}{R_s J_s} = -\alpha \cdot \Delta t$$

is used to calibrate the linear potentiometer $R_{25}$ in desired values $T_s$ of the radiation temperature by making use of the fact that each relative variation of the current signal is to be compensated for by an equal relative variation of the voltage signal

$$\frac{\beta \cdot \Delta U}{U_s} = \frac{\Delta R_{25}}{R_{15} + R_{17} + R_{25} + \Delta R_{25}} \cdot \frac{R_{15} + R_{17} + R_{25}}{R_{17} + R_{25}}$$

with a corresponding variation of the potentiometer $R_{25}$.

17. An apparatus as claimed in one of the claims 3 to 16, characterised in that the insulating plates (1) of a room or of a tepidarium are heatable by way of two 5-pole fault-current protective switches (76,77) by the power supply mains in two groups with substantially the same total resistance of their surface heat conductors (42) whose capacitive current flowing to the protective conductor (E) by way of the screening foils (46) is balanced with respect to coincidence of value and phase by additional capacitors (78, 79) connected between pole conductor and protective conductor, the fault-current protective switch provided for each group not being triggerable by capacitive earth currents which are greater than the rated triggering current, provided that the capacitive earth current of one group is in each case fed without switch to the zero branch winding of the fault-current protective switch of the other group, and in that any susceptibility to momentary mains voltage peaks is eliminated by bypassing a respective one of the four windings of the two fault-current protective switches by antiparallel-connected diodes (81, 82).

**Revendications**

1. Procédé pour la climatisation homogène par rayonnement d'un espace fermé de tous côtés, d'un tépidarium notamment, dans lequel l'enceinte largement calorifugée, composée de parois, d'un plafond et d'un plancher, est portée à une température de radiation uniforme par l'intermédiaire d'un chauffage électrique couvrant au moins la majeure partie de ses surfaces, ainsi que par l'intermédiaire de revêtements réfléchissant et/ou renvoyant le rayonnement thermique sur les surfaces non chauffées, une partie au moins du chauffage étant assurée par les parois, l'air ambiant étant maintenu à une température inférieure de 4°C au moins à la température moyenne de radiation et l'air vicié de l'espace étant évacué entre la paroi et le plafond, caractérisé en ce que l'homogénéisation de la température de radiation est assurée par un renforcement de la couche limite sur les faces chauffées des parois, par l'intermédiaire d'un matelas d'air empêchant un transfert thermique par convection vers l'air ambiant, ainsi que par la configuration réfléchissante du plancher non chauffé, et en ce que l'air neuf est admis tangentiellement par rapport au plancher ou à proximité du bord inférieur des parois, avec une température inférieure de 4°C au moins à la température de radiation fixée.

2. Procédé selon la revendication 1, dans lequel la résistance électrique, permettant de représenter la valeur réelle, est utilisée dans une régulation thermostatique de la température de radiation, caractérisé en ce que le dispositif de régulation thermostatique déconnecte du secteur alternatif les bandes chauffantes, pendant un passage par zéro du courant fourni par ce réseau, dès que la résistance des bandes chauffantes a dépassé, pour un nombre prédéfini de périodes successives du courant alternatif, la valeur de consigne de la résistance de compensation réglée sur le potentiomètre, ce même dispositif de régulation reconnectant les bandes au réseau alternatif après un nombre prédéfini de périodes.

3. Installation pour la climatisation homogène par rayonnement d'un espace fermé de tous côtés, d'un tépidarium notamment, présentant une enceinte largement calorifugée, composée de parois, d'un plafond et d'un plancher, dont les faces orientées vers l'espace sont couvertes, en majeure partie du moins, par des bandes chauffantes de grande surface disposées en partie du moins sur les parois, et dont les faces non chauffées sont prévues pour réfléchir et/ou renvoyer le rayonnement thermique, ainsi qu'une évacuation de l'air vicié de l'espace entre les parois et le plafond, caractérisée en ce que des éléments (58, 59) sont prévus sur les surfaces chauffées (46) des parois (1), ou à une distance de quelques millimètres de ces dernières, pour empêcher la convection sans entraver la transmission du rayonnement, en ce que le plancher (13) non chauffé est réfléchissant et en ce que des orifices (24a), de dimension réglable, sont prévus sur ou près du bord inférieur des parois (1) pour permettre une admission tangentielle par rapport au plancher de l'air de renouvellement.

4. Installation selon la revendication 3, caractérisée en ce que les éléments permettant d'empêcher la convection sans entraver la transmission du rayonnement sont représentés par un treillis en nid d'abeilles (58), obtenu à partir d'un mince film métallique et appliqué sur la face radiante (46) des bandes chauffantes (1).

5. Installation selon la revendication 3, caractérisée en ce que les éléments permettant d'empêcher la convection sans entraver la transmission du rayonnement sont représentés par un mince treillis de plastique, tendu devant la face radiante (46) des bandes (1), à une distance de quelques millimètres de cette dernière.

6. Installation suivant la revendication 3, caractérisée en ce que les éléments permettant d'empêcher la convection sans entraver la transmission du rayonnement sont constitués par des morceaux de fibres artificielles (59) de quelques millimètres de longueur, répartis par électricité statique sur la face radiante (46) des bandes (1) munie d'une couche de colle autodurcissante.

7. Installation selon une quelconque des revendications 3 à 6, caractérisée en ce que les parois du tépidarium sont constituées de plusieurs bandes chauffantes facilement transportables, représentées par des plaques isolantes (1) chauffées électriquement de la hauteur de la paroi, ces plaques étant assemblées latéralement par rainure (6) et languette (5) et maintenues sur leurs bords supérieurs et inférieurs par des rails en U (2, 3), fixés sur des montants (4) insérés entre le plafond et le plancher, ainsi que par des tourillons (7) prévus dans l'axe de rotation de la porte chauffée électriquement et s'engageant dans les orifices correspondants (8) des rails en U (2, 3).

8. Installation selon une quelconque des revendications 3 à 7, caractérisée par un cadre de lit (22) renforcé par des équerres (24) et monté librement dans le tépidarium, ce même cadre (22) étant tendu d'un treillis de cordes (21), supportant le corps humain, et présentant sur ses faces internes verticales les plaques isolantes (1) chauffées électriquement, dont les bords supérieurs et inférieurs arrivent respectivement au niveau du treillis (21) et du plancher réfléchissant (13), l'une des plaques (1) au moins montée sur le côté latéral du cadre de lit (22) étant réglable en hauteur et formant au niveau du plancher l'orifice (24a) de dimension réglable, vers lequel l'air froid est directement amené de l'extérieur, par l'intermédiaire d'un conduit isolé.

9. Installation selon une quelconque des revendications 3 à 8, caractérisée par un second cadre (25) de plaques isolantes verticales(1, 1a), prévu directement au-dessus du treillis de cordes (21) et dont la hauteur correspond au moins à celle du premier (22), ce cadre (25) pouvant être rabattu, sur l'un de ses côtés latéraux au moins, par l'intermédiare d'un levier pivotant et d'un contre-poids (30) et/ou intégralement relevé et supportant, à sa partie supérieure, un plafond de bandes chauffantes (1) ou un cadre horizontal (26) revêtu d'un film réflecteur (13), de manière à laisser, entre le plafond et les bords supérieurs de ses côtés latéraux, une fente d'aération (16) présentant pratiquement la largeur d'une main.

10. Installation selon une des revendications 8 et 9, caractérisée par un second treillis de cordes (35) à grosses mailles, tendu sur le cadre de lit (22) et/ou le treillis (21), et par plusieurs ressorts à boudin (36) entrelacés, logés dans le sens de la longueur du cadre entre les deux treillis (21, 35) et dont les différentes spires sont accrochées aux mailles de ces mêmes treillis (21, 35), formant ainsi un matelas convexe perméable à l'air.

11. Installation selon une des revendications 9 et 10, caractérisée par au moins un autre treillis à grosses mailles (37), permettant de supporter le ventre et les cuisses d'un patient allongé à plat ventre, ce treillis (37), formant une balançoire ou une bande fermée, étant accroché, au-dessus du treillis (21) tendu sur le cadre (22), à un cadre (41a), pouvant tourner autour de l'axe de symétrie longitudinal, et/ou à deux tubes horizontaux (40, 41) fixés à la tête (27) et au pied (28) du cadre du lit (22 et/ou 25), au-dessus de ce dernier et parallèlement à ses côtés latéraux.

12. Installation selon une quelconque des revendications 3 à 11, caractérisée en ce que la bande chauffante est constituée par un mince film de métal (42) plaqué sur un film support (43), ce film (42) étant transformé en une bande en zig-zag servant de bande chauffante par brûlage électrique d'étroites fentes (42a), au moyen d'électrodes à mines de graphite enrobées de métal circulant sur ce film.

13. Installation selon la revendication 12, caractérisée par un revêtement isolant (45) sur la bande chauffante (42), qui enveloppe les bords longitudinaux d'une plaque de mousse dure (44), un film métallique (46) étant plaqué, pour le raccordement à la terre, sur la face de cette même bande (42) opposée au conducteur chauffant, et par de minces armatures sur les extrémités des bandes ondulées (48), empêchant un collage du revêtement isolant (45) sur les coins des plaques de mousse dure (44).

14. Installation selon une des revendications 12 et 13, caractérisée par des bandes d'amenée (49), en film souple plus épais et de même composition que celui de la bande ondulée (42), soudées en plusieurs points sur les deux extrémités de bandes (48) au moyen de décharges de condensateur transmises par des mines de graphite enrobées de métal, la bande d'amenée plus épaisse (49) servant de contre-électrode au lieu du mince film métallique de l'extrémité de la bande (48), cette même bande (49) servant de contre-électrode le long des petits cordons de soudure circulaires (50) avec les extrémités (48), formant ainsi un solide assemblage métallique.

15. Installation selon une quelconque des revendications 3 à 14, permettant de réaliser le procédé suivant la revendication 2, caractérisée en ce que le courant de chauffage I traversant les groupes de bandes chauffantes (72, 73) délivre, par l'intermédiaire d'un transformateur de courant (68), un signal de courant $\beta R_S$ ($I_S + \Delta I$) à un amplificateur opérationnel (69) pour la commande thermostatique de la température de radiation des bandes au travers de relais «solid-state» (70, 71), en ce qu'un signal de tension $\beta$ ($U_S + \Delta U$), ajouté au signal de courant, provient de la tension appliquée aux groupes de bandes chauffantes et parvient avec un déphasage de 180°, par l'intermédiaire du transformateur de tension (74), au circuit d'entrée de l'amplificateur opérationnel (69), ce signal de tension étant affaibli par un atténuateur composé de $R_{15}$, comme résistance additionnelle, et du montage en série de $R_{17}$ et du potentiomètre $R_{25}$, comme résistance transversale, donnant la valeur de consigne $R_S$ de la résistance totale des groupes de bandes, de manière à ce que les signaux de tension et de courant se compensent dans le circuit d'entrée de l'amplificateur opérationnel (69) dans le cas où $\Delta U = 0$, $\Delta I = 0$ et $\Delta t = 0$, et en ce que le signal de sortie de l'amplificateur opérationnel (69), transformé en signal rectangulaire par la bascule de Schmitt (5)3–4, est dirigé vers une porte logique (7)4 avec un signal rectangulaire, retardé par $R_2$ et $C_2$ par rapport à la tension du secteur et limité à 1 ms par la diode $D_4$, la résistance $R_4$ et la bascule de Schmitt (5)13–12, ce dernier signal ne franchissant la porte que lorsque le signal de la bascule de Schmitt (5)3–4 coïncide, par suite du retard croissant avec la température des groupes de bandes (72, 73), avec le signal de la bascule de Schmitt (5)13–12, un nombre relativement important de ces impulsions devant parvenir au compteur MC 14 024, avant que ce dernier ne délivre un signal d'arrêt interrompant le passage des impulsions de mise en service des relais «solid-state» (70, 71) à un second compteur MC 14 040, qui maintient la coupure pendant plusieurs secondes.

16. Installation selon la revendication 15, caractérisée en ce que l'écart relatif du signal de courant

$$\frac{\beta R_s \cdot \Delta I}{R_s I_s} = -\alpha \cdot \Delta t$$

est utilisé pour le calibrage du potentiomètre linéaire $R_{25}$ aux valeurs de consigne $t_S$ de la température de radiation, en partant du fait que chaque écart relatif du signal de courant doit être compensé par un écart relatif équivalent du signal de tension

$$\frac{\beta \cdot \Delta U}{U_s} = \frac{\Delta R_{25}}{R_{15}+R_{17}+R_{25}+\Delta R_{25}} \cdot \frac{R_{15}+R_{17}+R_{25}}{R_{17}+R_{25}}$$

avec une modification correspondante du potentiomètre $R_{25}$.

17. Installation selon une quelconque des revendications 3 à 16, caractérisé en ce que les plaques isolantes (1) d'un espace ou d'un tépidarium peuvent être chauffées à partir du secteur, par l'intermédiaire de deux disjoncteurs de courant de fuite (76, 77) à 5 pôles, en deux groupes de bandes (42) présentant pratiquement la même valeur totale de résistance, le courant capacitif de ces bandes (42), s'écoulant par les films protecteurs (46) vers le fil de garde (E), étant égalisé en valeur et en phase par des condensateurs auxiliaires (78, 79) montés entre le conducteur polaire et le fil de garde, et le disjoncteur prévu pour chaque groupe ne pouvant pas être déclenché par des courants de terre capacitifs supérieurs au courant de déclenchement nominal, dans la mesure où le courant de terre de l'un des groupes est dirigé, sans interrupteur, sur l'enroulement de la branche neutre du disjoncteur de l'autre groupe, et en ce que les éventuelles pointes de tension momentanées sont neutralisées par shuntage de l'un des quatre enroulements des deux disjoncteurs avec des diodes montées en antiparallèle (81, 82).

FIG.1

6     1     5     1a     6

FIG. 2

10   9   17   9   11   10   9   18   17   9   11

12     12

A     A

1     1a

FIG. 3

0 018 502

FIG. 4

FIG. 5

FIG. 6

FIG. 7

FIG. 8

FIG. 9

FIG. 10

29

FIG. 11

42    43

48    48

A          A

43    42a

FIG. 12

6  42  44  43a  43          6  42  44  47  43  6

45          46          46          47

FIG. 13          FIG. 14

FIG. 15

FIG. 16

FIG. 17

FIG. 18

FIG. 19

FIG. 20

FIG. 21

FIG. 22

FIG. 23

S T N E

C1
R1
C2
R2

50 mA

S1
S2

75

76 77

81 82

R 3 R 4

50 mA
25 µF

80

42
RL1
46
CL1

42
RL 2
46
CL 2

78 79

1 KΩ

Temperatur-
Fühler

FIG. 24

0 018 502

FIG. 25

0 018 502

R  S  T  N  E

Rel 1

86

Regel - Elektronik

85

Rel 2

42

Gp 1   46

42

Gp 2

86   46   87

Gp 3   42

88   46   89

80

Temperatur- Einstellung

Ni - Draht - Messwiderstand

FIG. 26

53